(19) **Europäisches Patentamt / European Patent Office / Office européen des brevets**

(11) **EP 4 365 768 A1**

(12) # EUROPEAN PATENT APPLICATION
published in accordance with Art. 153(4) EPC

(43) Date of publication:
**08.05.2024 Bulletin 2024/19**

(21) Application number: **23844161.2**

(22) Date of filing: **30.06.2023**

(51) International Patent Classification (IPC):
**G06F 40/58** (2020.01)

(86) International application number:
**PCT/CN2023/104502**

(87) International publication number:
**WO 2024/055707 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.09.2022 CN 202211123598**
**02.12.2022 CN 202211538681**

(71) Applicant: **Huawei Technologies Co., Ltd.
Shenzhen, Guangdong 518129 (CN)**

(72) Inventors:
• **WANG, Weixuan
Shenzhen
Guangdong 518129 (CN)**
• **PENG, Wei
Shenzhen
Guangdong 518129 (CN)**

(74) Representative: **Maiwald GmbH
Engineering
Elisenhof
Elisenstrasse 3
80335 München (DE)**

(54) **TRANSLATION METHOD AND RELATED DEVICE**

(57)    This application relates to the field of artificial intelligence, and discloses a translation method and a related device to improve accuracy of machine translation. The method includes: obtaining a to-be-translated sentence, where the to-be-translated sentence includes a polysemous word expressed in a first language; determining a target semantic meaning of the polysemous word according to a disambiguation rule, where the disambiguation rule indicates to determine the target semantic meaning of the polysemous word by using a translation model, the translation model may perform data processing on a word vector sequence corresponding to the to-be-translated sentence to obtain the semantic meaning of the polysemous word in the to-be-translated sentence, the translation model is obtained by training a parallel training sentence pair, and both training sentences in the parallel training sentence pair are the first language; and determining a translation result of the to-be-translated text based on the target semantic meaning, where the translation result includes content whose target semantic meaning is expressed in a second language, and the first language is different from the second language.

FIG. 9

Obtain a to-be-translated sentence, where the to-be-translated sentence includes a polysemous word expressed in a first language — 901

Determine a target semantic meaning of the polysemous word according to a disambiguation policy, where the disambiguation policy indicates to determine the target semantic meaning of the polysemous word by using a translation model, the translation model may perform data processing on a word vector sequence corresponding to the to-be-translated sentence to obtain the semantic meaning of the polysemous word in the to-be-translated sentence, the translation model is obtained by training a parallel training sentence pair, and both training sentences in the parallel training sentence pair are the first language — 902

Determine a translation result of the to-be-translated text based on the target semantic meaning, where the translation result includes content whose target semantic meaning is expressed in a second language, and the first language is different from the second language — 903

EP 4 365 768 A1

## Description

This application claims priorities to Chinese Patent Application No. 202211123598.4, filed with the China National Intellectual Property Administration on September 15, 2022 and entitled "DATA PROCESSING METHOD", and to Chinese Patent Application No. 202211538681.8, filed with the China National Intellectual Property Administration on December 2, 2022 and entitled "TRANSLATION METHOD AND RELATED DEVICE", both of which are incorporated herein by reference in their entireties.

## TECHNICAL FIELD

This application relates to the field of artificial intelligence technologies, and in particular, to a translation method and a related device.

## BACKGROUND

In the field of artificial intelligence (artificial intelligence, AI), machine translation, as a bridge to solve human language communication obstacles, has been commercialized on a large scale, regardless of whether it is text translation independently used, simultaneous interpretation in conference scenarios, or subtitle translation in videos. Machine translation uses a translation model to process texts in one language, translate the texts into texts in another language, and return the translated texts to a user, or connect to various upstream natural language processing (natural language processing, NLP) tasks for use.

With the development of neural networks and the use of a large quantity of parallel corpora, translation technologies are becoming more advanced, which has significantly improved the translation quality. However, there are still a large quantity of translation accuracy problems, affecting user experience. Particularly, when processing a homograph, which has a plurality of semantic meanings, the translation model cannot recognize the correct semantic meaning of the homograph, and therefore cannot obtain a correct translation.

## SUMMARY

This application provides a translation method and a related device, to improve accuracy of machine translation.

According to a first aspect, a translation method is provided. The method includes: obtaining a to-be-translated sentence, where the to-be-translated sentence includes a polysemous word expressed in a first language; determining a target semantic meaning of the polysemous word according to a disambiguation rule, where the disambiguation rule indicates to determine the target semantic meaning of the polysemous word by using a translation model, the translation model may perform data processing on a word vector sequence corresponding to the to-be-translated sentence to obtain the semantic meaning of the polysemous word in the to-be-translated sentence, the translation model is obtained by training a parallel training sentence pair, and both training sentences in the parallel training sentence pair are the first language; and determining a translation result of the to-be-translated text based on the target semantic meaning, where the translation result includes content whose target semantic meaning is expressed in a second language, and the first language is different from the second language. The translation model is trained by using training sentences that are both in the first language as a parallel corpus, so that the translation model can better learn, from sentences expressed in the first language, how to extract accurate semantic information, and for a polysemous word having a plurality of semantic meanings, semantic information in a sentence can also be extracted in a more accurate manner. Therefore, the semantic meaning expressed by the polysemous word in the to-be-translated sentence can be accurately determined based on the model that is obtained through training and that accurately recognizes the semantic meaning of the polysemous word, so that the polysemous word can be better translated into content expressed in the second language. The meaning of the polysemous word expressed in the first language in the to-be-translated sentence is basically consistent with the meaning expressed in the translation result after the polysemous word is translated, thereby improving translation accuracy.

In a possible implementation, the translation model includes a first encoder, and the disambiguation rule indicates a manner of determining the target semantic meaning of the polysemous word by using the first encoder. The first encoder in the translation model is configured to extract a semantic meaning expressed by the to-be-translated sentence including the polysemous word, and output a corresponding semantic representation (an encoding vector). The first encoder is obtained by training the parallel training sentence pair, and can extract an accurate semantic meaning of a word in a sentence. Therefore, the first encoder determines and accurately extracts the target semantic meaning of the polysemous word, so that the polysemous word represented in the second language in the translation result is more accurate, and meanings of the polysemous word represented before and after translation are the same. In this way, the translation result is more accurate.

In a possible implementation, the parallel training sentence pair includes a first training sentence and a second training sentence. Before the obtaining a to-be-translated sentence, the method further includes: encoding the first training sentence to obtain a first training encoding vector; encoding the second training sentence to obtain a second training encoding vector; and obtaining the first encoder based on a first distance between the first training encoding vector and the second training encoding vector, where a semantic meaning represented by the first training sentence and a semantic meaning represented by the second training sentence are the same. The first encoder is trained by using the first training sentence and the second training sentence that are expressed in the first language and have the same semantic meaning, to reduce a distance between training sentences with the same semantic meaning in an encoding space, and the first encoder can be trained to learn to accurately encode the semantic meaning expressed by the sentence expressed in the first language, thereby improving accuracy of the first encoder in determining and extracting a word in the to-be-translated sentence.

In a possible implementation, the parallel training sentence pair includes a third training sentence and a reference sentence, and before the obtaining a to-be-translated sentence, the method further includes: encoding the third training sentence to obtain a third training encoding vector, where the third training encoding vector includes a first polysemous word encoding vector of a training polysemous word; encoding the second training sentence to obtain a reference encoding vector, where the reference encoding vector includes a second polysemous word encoding vector of the training polysemous word; and obtaining the first encoder based on a second distance between the first polysemous word encoding vector and the second polysemous word encoding vector. By training different training sentences including a same training polysemous word, the first encoder can learn how to encode a plurality of semantic meanings of the training polysemous word with reference to context information of a sentence, so that the first encoder can accurately distinguish between the semantic meanings of the polysemous word in the sentence.

In a possible implementation, a semantic meaning of the training polysemous word in the third training sentence is the same as or similar to that in the reference sentence, and the first encoder is obtained through an update by reducing the second distance. Alternatively, a semantic meaning of the polysemous word in the third training sentence is different from that in the reference sentence, and the first encoder is obtained through an update by increasing the second distance. By shortening a distance between encoding vectors corresponding to same semantic meanings of the polysemous word in an encoding space, or extending a distance between encoding vectors corresponding to different semantic meanings of the polysemous word in the encoding space, that is, clustering the same semantic meanings of the polysemous word in the encoding space, or isolating different semantic meanings of the polysemous word in the encoding space, different semantic meanings of a same training polysemous word have different representations in the encoding space. Therefore, after training, the first encoder can not only learn how to determine, based on context information of the polysemous word, a correct semantic meaning of the polysemous word expressed in the sentence, but also accurately encode and express the semantic meaning. In this way, the first encoder can accurately distinguish between the semantic meanings of the polysemous word in the sentence.

In a possible implementation, the translation model further includes a second encoder and a decoder. The determining a target semantic meaning of the polysemous word according to a disambiguation rule includes: encoding the to-be-translated sentence by using the first encoder to obtain a first encoding vector, where the first encoding vector includes information about the target semantic meaning of the polysemous word; and encoding the to-be-translated sentence by using the second encoder to obtain a second encoding vector, where the second encoding vector includes syntactic information and semantic information of the to-be-translated sentence. The determining a translation result of the to-be-translated sentence based on the target semantic meaning includes: decoding the first encoding vector and the second encoding vector by using the decoder, to obtain the translation result. The first encoding vector and the second encoding vector include different information, and have different focuses. The first encoding vector focuses on accurately extracting the semantic information from the sentence, especially the semantic meaning of the polysemous word, and the second encoding vector focuses on syntactic information. Therefore, a translation result is obtained by combining the first encoding vector and the second encoding vector. This can not only ensure a proper word order in the translation result, but also ensure that a semantic meaning expressed by a word in the translation result is the same as a semantic meaning expressed by the to-be-translated sentence, thereby improving translation accuracy.

In a possible implementation, the decoder includes stacked at least one transformer (transformer) layer, and each transformer layer is configured to fuse the first encoding vector and the second encoding vector to obtain a second result. A transformer decodes the first encoding vector and the second encoding vector by using an attention mechanism, so that decoding accuracy can be improved, thereby improving translation precision.

In a possible implementation, each transformer layer includes a self-attention layer, a cross-attention layer, and a feed-forward layer. The cross-attention layer is configured to obtain a first cross-attention vector based on the first encoding vector and a self-attention vector output by the self-attention layer, and obtain a second cross-attention vector based on the second encoding vector and the self-attention vector. The feed-forward layer is configured to obtain an output probability of the transformer layer based on the first cross-attention vector and the second cross-attention vector, where the output probability is used to predict the second result, or used as an input of the self-attention layer of a next transformer layer.

In a possible implementation, the cross-attention layer includes a first cross-attention sublayer and a second cross-attention sublayer, and the feed-forward layer includes a first feed-forward sublayer, a second feed-forward sublayer, and an addition and normalization layer. The first cross-attention sublayer is configured to obtain the first cross-attention vector based on the first encoding vector and the self-attention vector. The second cross-attention sublayer is configured to obtain the second cross-attention vector based on the second encoding vector and the self-attention vector. The first feed-forward sublayer is configured to forward propagate the first cross-attention vector to obtain a first feed-forward vector. The second feed-forward sublayer is configured to forward propagate the second cross-attention vector to obtain a second feed-forward vector. The addition and normalization layer is configured to perform addition on the first feed-forward vector, the second feed-forward vector, the first cross-attention vector, and the second cross-attention vector to obtain an addition vector, and normalize the addition vector to obtain the output probability.

In a possible implementation, the cross-attention layer includes a first cross-attention sublayer and a second cross-attention sublayer, and the feed-forward layer includes a third feed-forward sublayer, an addition and normalization layer, and an integration function. The first cross-attention sublayer is configured to obtain the first cross-attention vector based on the first encoding vector and the self-attention vector. The second cross-attention sublayer is configured to obtain the second cross-attention vector based on the second encoding vector and the self-attention vector. The integration function is used to integrate the first cross-attention vector and the second cross-attention vector to obtain an integrated cross-attention vector. The third feed-forward sublayer is configured to forward propagate a first integrated cross-attention vector to obtain an integrated feed-forward vector. The addition and normalization layer is configured to perform addition on a first integrated feed-forward vector, the first cross-attention vector, and the second cross-attention vector to obtain an addition vector, and normalize the addition vector to obtain the output probability.

In a possible implementation, each transformer layer includes a self-attention layer, a cross-attention layer, and a feed-forward layer. The cross-attention layer is configured to obtain an integrated cross-attention vector based on the first encoding vector, the second encoding vector, and a self-attention vector output by the self-attention layer. The feed-forward layer is configured to obtain an output probability of the transformer layer based on the integrated cross-attention vector, where the output probability is used to predict the second result, or used as an input of the self-attention layer of a next transformer layer.

In a possible implementation, the cross-attention layer includes a first cross-attention sublayer and a second cross-attention sublayer. The first cross-attention sublayer is configured to obtain a first cross-attention vector based on the first encoding vector and the self-attention vector, and the second cross-attention sublayer is configured to obtain the integrated cross-attention vector based on the second encoding vector and the first cross-attention vector. Alternatively, the second cross-attention sublayer is configured to obtain a second cross-attention vector based on the second encoding vector and the self-attention vector, and the first cross-attention sublayer is configured to obtain the integrated cross-attention vector based on the first encoding vector and the second cross-attention vector.

According to a second aspect, a translation method is provided, including: obtaining a to-be-translated sentence, where the to-be-translated sentence includes a polysemous word expressed in a first language; obtaining a first encoding vector and a second encoding vector of the to-be-translated sentence, where the first encoding vector is different from the second encoding vector, the first encoding vector includes a first polysemous word encoding vector of a polysemous word, the first polysemous word encoding vector includes information about a first semantic meaning of the polysemous word, the first polysemous word encoding vector is used to increase a probability of translating the polysemous word into the first semantic meaning expressed in a second language, and the first language is different from the second language; and obtaining a translation result of the to-be-translated sentence based on the first encoding vector and the second encoding vector, where the translation result includes the first semantic meaning expressed in the second language. By adding, to a translation model, a disambiguation encoder configured to identify a target semantic meaning of the polysemous word, the disambiguation encoder may encode the target semantic meaning of the polysemous word to obtain a polysemous word encoding vector corresponding to the polysemous word, and use code including the polysemous word encoding vector as an input of a decoder of the translation model, so that a probability that the polysemous word is translated into a correct semantic meaning can be improved, thereby improving translation accuracy.

In a possible implementation, the second encoding vector includes a second polysemous word encoding vector of the polysemous word, the second polysemous word encoding vector includes information about a second semantic meaning of the polysemous word, and accuracy of the first semantic meaning is greater than or equal to accuracy of the second semantic meaning. Therefore, the translation result may be obtained with reference to the first encoding vector and the second encoding vector, thereby improving translation accuracy.

In a possible implementation, the obtaining a first encoding vector and a second encoding vector of the to-be-translated sentence includes: inputting the to-be-translated sentence into a first encoder to obtain the first encoding vector, and inputting the to-be-translated sentence into a second encoder to obtain the second encoding vector, where the first encoder is different from the second encoder. The first encoder is configured to extract first semantic information of the word in the to-be-translated sentence, and the second encoder is configured to extract second semantic information and syntactic information of the word in the to-be-translated sentence, where accuracy of the first semantic information is greater than or equal to accuracy of the first semantic information. The first encoder and the second encoder have a respective focus on a type and a capability of extracting information. Therefore, by combining the first encoding vector and the second encoding vector, the first semantic information, the second semantic information, and the syntactic information can be combined, to ensure that an order and semantic meanings of words in the translation result are proper and correct, thereby improving translation accuracy.

In a possible implementation, the obtaining a translation result of the to-be-translated statement based on the first encoding vector and the second encoding vector includes: inputting the first encoding vector and the second encoding vector into the decoder to obtain the translation result, where the decoder is configured to fuse and decode the first encoding vector and the second encoding vector. By fusing the encoding vectors output by the first encoder and the second encoder in the decoder, information in the first encoding vector and the second encoding vector can be better reserved and combined, thereby avoiding translation inaccuracy caused by information loss.

In a possible implementation, the decoder includes stacked at least one transformer transformer layer, and each transformer layer is configured to fuse the first encoding vector and the second encoding vector to obtain a second result.

In a possible implementation, each transformer layer includes a self-attention layer, a cross-attention layer, and a feed-forward layer. The cross-attention layer is configured to obtain a first cross-attention vector based on the first encoding vector and a self-attention vector output by the self-attention layer, and obtain a second cross-attention vector based on the second encoding vector and the self-attention vector. The feed-forward layer is configured to obtain an output probability of the transformer layer based on the first cross-attention vector and the second cross-attention vector, where the output probability is used to predict the second result, or used as an input of the self-attention layer of a next transformer layer.

In a possible implementation, the cross-attention layer includes a first cross-attention sublayer and a second cross-attention sublayer, and the feed-forward layer includes a first feed-forward sublayer, a second feed-forward sublayer, and an addition and normalization layer. The first cross-attention sublayer is configured to obtain the first cross-attention vector based on the first encoding vector and the self-attention vector. The second cross-attention sublayer is configured to obtain the second cross-attention vector based on the second encoding vector and the self-attention vector. The first feed-forward sublayer is configured to forward propagate the first cross-attention vector to obtain a first feed-forward vector. The second feed-forward sublayer is configured to forward propagate the second cross-attention vector to obtain a second feed-forward vector. The addition and normalization layer is configured to perform addition on the first feed-forward vector, the second feed-forward vector, the first cross-attention vector, and the second cross-attention vector to obtain an addition vector, and normalize the addition vector to obtain the output probability.

In a possible implementation, the cross-attention layer includes a first cross-attention sublayer and a second cross-attention sublayer, and the feed-forward layer includes a third feed-forward sublayer, an addition and normalization layer, and an integration function. The first cross-attention sublayer is configured to obtain the first cross-attention vector based on the first encoding vector and the self-attention vector. The second cross-attention sublayer is configured to obtain the second cross-attention vector based on the second encoding vector and the self-attention vector. The integration function is used to integrate the first cross-attention vector and the second cross-attention vector to obtain an integrated cross-attention vector. The third feed-forward sublayer is configured to forward propagate a first integrated cross-attention vector to obtain an integrated feed-forward vector. The addition and normalization layer is configured to perform addition on a first integrated feed-forward vector, the first cross-attention vector, and the second cross-attention vector to obtain an addition vector, and normalize the addition vector to obtain the output probability.

In a possible implementation, each transformer layer includes a self-attention layer, a cross-attention layer, and a feed-forward layer. The cross-attention layer is configured to obtain an integrated cross-attention vector based on the first encoding vector, the second encoding vector, and a self-attention vector output by the self-attention layer. The feed-forward layer is configured to obtain an output probability of the transformer layer based on the integrated cross-attention vector, where the output probability is used to predict the second result, or used as an input of the self-attention layer of a next transformer layer.

In a possible implementation, the cross-attention layer includes a first cross-attention sublayer and a second cross-attention sublayer. The first cross-attention sublayer is configured to obtain a first cross-attention vector based on the first encoding vector and the self-attention vector, and the second cross-attention sublayer is configured to obtain the integrated cross-attention vector based on the second encoding vector and the first cross-attention vector. Alternatively, the second cross-attention sublayer is configured to obtain a second cross-attention vector based on the second encoding vector and the self-attention vector, and the first cross-attention sublayer is configured to obtain the integrated cross-attention vector based on the first encoding vector and the second cross-attention vector.

In a possible implementation, the first encoding vector is obtained by encoding by using the first encoder, the first encoder is obtained by updating a first distance between a first training encoding vector and a second training encoding vector, the first training encoding vector is obtained by the first encoder by encoding a first training sentence, the second training encoding vector is obtained by the first encoder by encoding a second training sentence, and both the first training sentence and the second training sentence are a first language. Therefore, the first encoder can accurately extract semantic information of a sentence.

In a possible implementation, the first encoding vector is obtained by encoding by using the first encoder, the first encoder is obtained by updating a second distance between a third semantic encoding vector and a reference semantic encoding vector, the third semantic encoding vector is an encoding vector corresponding to a training polysemous word in a third training encoding vector, the reference semantic encoding vector is an encoding vector corresponding to a training polysemous word in the reference training encoding vector, the third training encoding vector is obtained by the first encoder by encoding a third training sentence, the reference training encoding vector is obtained by the first encoder by encoding a reference sentence, the reference sentence is obtained based on a semantic label of a training polysemous word in the third training sentence, and the semantic label is a correct semantic meaning of the training polysemous word in the third training sentence. Therefore, the first encoder can accurately distinguish between the semantic meanings of the polysemous word in the sentence.

In a possible implementation, a semantic meaning of the training polysemous word in the third training sentence is the same as or similar to that in the reference sentence, and the first encoder is obtained through an update by reducing the second distance. Alternatively, a semantic meaning of the polysemous word in the third training sentence is different from that in the reference sentence, and the first encoder is obtained through an update by increasing the second distance. In an encoding space, a distance between same or similar semantic meanings of the polysemous word is shortened, and a distance between different semantic meanings of the polysemous word is extended, so that an encoding vector output by the first encoder can accurately represent the semantic meaning of the polysemous word in the to-be-translated sentence, thereby improving translation precision.

According to a third aspect, a translation system is provided. The translation system includes various modules configured to perform the translation method according to any one of the first aspect or the possible implementations of the first aspect, or according to any one of the second aspect or the possible implementations in the second aspect.

According to a fourth aspect, a computing device is provided. The translation device includes a processor and a memory, where the processor is coupled to the memory, and the processor is configured to perform, according to instructions stored in the memory, operation steps of the translation method according to any one of the first aspect or the possible implementations of the first aspect, or according to any one of the second aspect or the possible implementations of the second aspect.

According to a fifth aspect, a chip system is provided, including a processor and a power supply circuit, where the power supply circuit is configured to supply power to the processor, and the processor is configured to perform operation steps of the translation method according to any one of the first aspect or the possible implementations of the first aspect, or according to any one of the second aspect or the possible implementations of the second aspect.

According to a sixth aspect, a computer-readable storage medium is provided. The computer-readable storage medium includes instructions. When the computer-readable storage medium is run on a computer, the computer is enabled to perform the translation method according to any one of the first aspect or the possible implementations of the first aspect.

In this application, the implementations provided in the foregoing aspects may be further combined to provide more implementations.

**BRIEF DESCRIPTION OF DRAWINGS**

FIG. 1 is a schematic diagram of an architecture of neural network machine translation;
FIG. 2 is a mainstream NMT architecture;
FIG. 3 is a schematic diagram of an architecture of a system according to this application;
FIG. 4 is a schematic diagram of a structure of a translation model according to this application;
FIG. 5 is a schematic diagram of a structure of another translation model according to this application;
FIG. 6 is a schematic diagram of a training method of a disambiguation encoder according to this application;
FIG. 7 is a schematic diagram of another training method of a disambiguation encoder according to this application;
FIG. 8 is a schematic diagram of a training scenario of a disambiguation encoder according to this application;
FIG. 9 is a schematic flowchart of a translation method according to this application;
FIG. 10 is a schematic diagram of a structure of another translation model according to this application;
FIG. 11 is a schematic diagram of a structure of another translation model according to this application;
FIG. 12a is a schematic diagram of a structure of another translation model according to this application;
FIG. 12b is a schematic diagram of a structure of another translation model according to this application;
FIG. 13a is a visual representation of an encoding vector of a polysemous word by a common encoder in a latent space;
FIG. 13b is a visual representation of an encoding vector of a polysemous word by a disambiguation encoder in a latent space according to this application;
FIG. 14 is a schematic diagram of a structure of a translation system according to this application; and
FIG. 15 is a schematic diagram of a structure of a computing device according to this application.

## DESCRIPTION OF EMBODIMENTS

This application provides a translation method to resolve a problem of translation accuracy of a polysemous word. In this application, a translation model that can accurately translate a polysemous word with a plurality of semantic meanings is obtained through training, and a to-be-translated sentence is translated based on the translation model, thereby improving translation accuracy.

This application relates to a large amount of knowledge related to machine translation. To better understand the solutions provided in this application, the following describes terms related to machine translation in this application.

1. Natural language processing (natural language processing, NLP)

A natural language (natural language) is a human language, and natural language processing (NLP) is processing of the human language.

Natural language processing is a process of systematic analysis, understanding, and information extraction of text data in an intelligent and efficient manner. By using NLP and components of NLP, massive chunks of text data can be managed, or a large quantity of automated tasks can be executed, and various problems such as automatic summarization (automatic summarization), machine translation (machine translation, MT), named entity recognition (named entity recognition, NER), relation extraction (relation extraction, RE), information extraction (information extraction, IE), sentiment analysis, speech recognition (speech recognition), a question answering (question answering) system, and topic segmentation can be resolved.

2. Machine translation (machine translation, MT)

Machine translation is a process of translating a text or a language from one natural language to another natural language by using a computer program. In other words, machine translation is a process of using a machine to convert the text or a speech from one language to another language that has a same meaning.

3. Neural machine translation (neural machine translation, NMT)

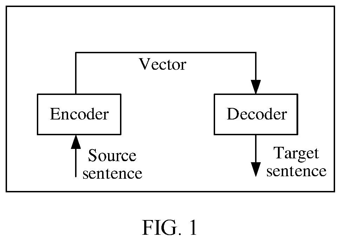

Neural machine translation may also be referred to as neural network machine translation. Neural network translation refers to machine translation in which a neural network technology is used. The purpose of the machine translation is achieved by applying the neural network technology to the machine translation. FIG. 1 is a schematic diagram of an NMT architecture. As shown in FIG. 1, an NMT structure generally includes an encoder (encoder) and a decoder (decoder). The encoder encodes a source sentence to be translated to generate a vector, and the decoder decodes the vector of the source sentence to generate a corresponding target sentence. An encoding process and a decoding process may be implemented by using a convolutional neural network (convolutional neural network, CNN), a recurrent neural network (recurrent neural network, RNN), a long short-term memory (Long Short-Term Memory, LSTM) network, a gated recurrent unit (Gated Recurrent Unit, GRU) network, an attention mechanism (Attention Mechanism), or the like. NMT may be considered as a complex neural network, and iterative training is performed on the NMT until a model converges and a trained translation model is obtained. The trained translation model may be used to execute a translation task.

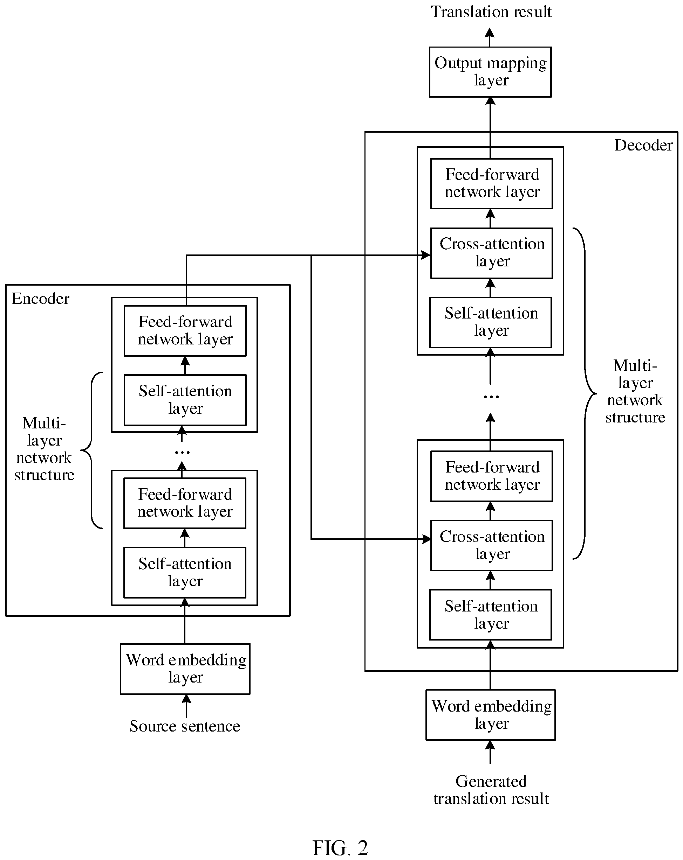

FIG. 2 is a mainstream NMT architecture, that is, a transformer framework. The transformer framework is used as an example to describe a workflow of neural network machine translation. The transformer framework mainly includes an encoder and a decoder. A word embedding (source embedding) layer is configured to receive an input source sentence, and perform word embedding on the source sentence, to obtain a word vector corresponding to each word included in the source sentence. The encoder and the decoder include a plurality of layers, and each layer of the encoder/decoder includes some encoding units/decoding units. Each layer of the encoder performs a series of neural network transformations on the word vector corresponding to the source sentence, and then represents the word vector as a high-dimensional vector. Each layer of the decoder is responsible for re-decoding (translating) the high-dimensional vector into a target language. In particular, each transformer layer of the encoder may include a self-attention (self-attention) layer and a feed-forward network (feed-forward network, FNN) layer. The self-attention layer of the encoder considers a weight (an influence of each word on a currently encoded word vector) of a word vector of each word in the source sentence when encoding each word vector. The feed-forward network layer of the encoder performs nonlinear transformation on an output vector of the self-attention layer. In particular, each layer of the decoder includes a self-attention (self-attention) layer, an encoder-decoder attention (encoder-decoder attention) layer, and a feed-forward network layer. The encoder-decoder attention layer may also be referred to as a cross-attention layer. In a decoding process, the self-attention layer of the decoder considers impact of a generated new word on a currently decoded vector. In this application, the new word is also referred to as a target word, and the new word and the target word have a same meaning. The encoder-decoder attention layer of the decoder considers impact of an input of the encoder on the current decoded vector. The feed-forward network layer of the decoder performs nonlinear transformation on an output vector of the encoder-decoder attention layer. An output mapping layer receives a decoding vector output by a last network layer of the decoder, and converts the decoding vector into a translation result, for example, generates a new word. After the generated new word is processed through the word embedding layer, a word vector of the generated new word is obtained. The word vector of the generated new word is used as an input of a first network layer of the decoder. This process continues until an end symbol is generated or another preset stop condition is met. In this case, all target words generated in a decoding phase are the translation result.

In some embodiments, in addition to the word embedding layer, the translation model further includes a positional encoding (positional encoding) layer. At the positional encoding layer, a position of each word in a current input may be obtained, to generate a position vector for the position of each word. In some examples, the position of each word may be a position of the word relative to another word. When a word embedding vector and a position vector of each word in the current input are obtained, the position vector of each word and the corresponding word embedding vector may be combined to obtain a feature vector of each word, namely, a plurality of feature vectors corresponding to the current input. The plurality of feature vectors may be represented as an embedding matrix with a preset dimension. For the plurality of feature vectors, a quantity of the feature vectors may be set to M, and the preset dimension may be set to a dimension of H. In this case, the plurality of feature vectors may be represented as an M×H embedding matrix.

For example, a specific process of attention calculation is as follows: Obtain P input vectors from a previous layer of the transformer layer; obtain, by using any first input vector in the P input vectors as the center and based on a degree of association between each input vector within a preset attention window and the first input vector, an intermediate vector corresponding to the first input vector; and determine P intermediate vectors corresponding to the P input vectors. The attention layer may also be referred to as a multi-head attention (multi-head attention) layer. In an example, the attention layer may be a fixed window multi-head attention (fixed window multi-head attention) layer.

In some embodiments, the transformer layer may be a next layer of the foregoing embedding layer (the word embedding layer and the positional encoding layer), and the P input vectors are the plurality of feature vectors obtained from the embedding layer. In some embodiments, the at least one transformer layer in the neural network provided in embodiments of this specification further includes another transformer layer. The transformer layer is a previous layer of a first self-attention layer, and the P input vectors are P output vectors output by the transformer layer. At the last transformer layer in the neural network, a plurality of output vectors obtained by performing the foregoing steps may be used as a feature representation of the current input. The feature representation is a feature representation that is of the current input and that is suitable for computer processing, and may be used for tasks such as text similarity, text classification, reading comprehension, and machine translation.

The attention mechanism simulates an internal process of an observational behavior of a creature, is a mechanism that aligns internal experience with external feelings to increase observation precision of some regions, and can quickly select high-value information from a large amount of information by using limited attention resources. The attention mechanism can quickly extract an important feature of sparse data, and therefore is widely used in natural language processing tasks, especially machine translation. A self-attention mechanism (self-attention mechanism) is an improvement on the attention mechanism. The self-attention mechanism becomes less dependent on external information and is better at capturing an internal correlation of data or features. The attention mechanism may effectively encode a word into several vector representations by calculating a dependency relationship between words, so that an output word vector representation includes semantic information of the word vector representation in a corpus, and context information of the corpus is combined, so that a semantic meaning represented by the word vector representation is more accurate. The word vector representation is also referred to as a latent state in deep learning (Deep Learning).

For example, in a processing process of converting a sequence $[x_1 x_2 x_3 x_4 x_5 x_6 x_7 x_8]$ into an output sequence $[h_1 h_2 h_3 h_4 h_5 h_6 h_7 h_8]$, if a length of an input sequence is N, and a dimension of each word (that is, each initial vector) is d, an input sequence vector forms a matrix X. Matrix multiplication (that is, linear transformation) is performed on the matrix X and three matrices $W_k, W_v, W_q \in \mathbb{R}^{d \times d}$, to obtain three matrices $K, V, Q \in \mathbb{R}^{N \times d}$, which are used as inputs for self-attention calculation. During the self-attention calculation, a product of K and Q is calculated, to obtain an N×N attention matrix (attention matrix), which represents dependency between elements in the input sequence, that is, a degree of association. Finally, the matrix is multiplied by V and then softmax processing is performed, to obtain a

sequence representation $\mathbb{R}^{N \times d}$ , including N d-dimensional vectors, that is, an attention calculation result. In a self-attention model, $h_i$ is integrated into information of similarity between a word vector $x_i$ in each input sequence and all other word vectors in the input sequence. In other words, $h_i$ has dependency on information of each input word vector in the sentence, that is, the output sequence includes global information. In other words, a vector representation of the sequence learned by the output sequence can capture long-distance dependency, and the training and inference processes of the attention mechanism have better parallelism, thereby achieving more efficient training and inference effect. Conceptually, attention may be understood as selecting a small amount of important information from a large amount of information, focusing on the important information, and ignoring most of unimportant information. A focusing process is reflected in calculation of a weight coefficient. A larger weight indicates a higher focus on a value (value, that is, data in the foregoing matrix V) corresponding to the weight. In other words, the weight represents importance of information, and the value is information corresponding to the weight.

4. Model update

A loss function (loss function) may also be referred to as a cost function (cost function), and is a metric used to compare a difference between a predicted output of a machine learning model for a sample and a real value (which may also be referred to as a supervised value) of the sample, that is, used to measure a difference between the predicted output of the machine learning model for the sample and the real value of the sample. The loss function may usually include a loss function such as a mean squared error, a cross entropy, a logarithm, and an exponent.

Gradient is a derivative vector of the loss function about parameters.

Random gradient is a gradient corresponding to a case in which the loss function of each calculation is calculated based on data obtained by random sampling, because there are a large quantity of samples in machine learning.

Back propagation (back propagation, BP) is an algorithm that calculates a gradient of a model parameter and updates the model parameter based on the loss function.

5. Evaluation Indicator

Bilingual evaluation understudy (bilingual evaluation understudy, BLEU) compares automatically translated consecutive phrases with consecutive phrases found in a reference translation and counts a quantity of matches in a weighted manner. These matches are irrelevant to location. A higher matching degree indicates a higher similarity with the reference translation and a higher score. A formula is as follows:

$$ BLEU = BP \times \exp\left( \sum_{n=1}^{N} W_n \times \log P_n \right), $$

where

$$ BP = \begin{cases} 1 & lc > lr \\ \exp\left(1 - lr/lc\right) & lc \leq lr \end{cases} $$

$Wn$ is a weight and is generally 1/N. $Pn$ indicates an n-gram precision (n-gram precision). $BP$ indicates a brevity penalty (brevity penalty), $lc$ indicates a length of a translated text of machine translation, and $lr$ indicates a length of a shortest translated text of reference translation.

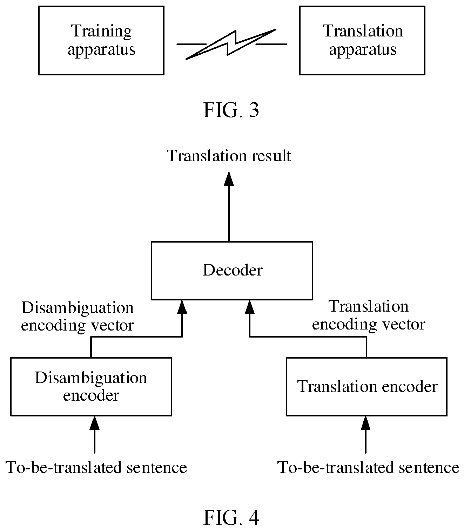

FIG. 3 shows an architecture of a system according to this application. The system includes a training apparatus and a translation apparatus. The training apparatus is configured to train and update the translation model. The translation apparatus is configured to perform translation based on the translation model obtained through training by the training apparatus.

Both the training apparatus and the translation apparatus may be implemented by a server. The training apparatus and the translation apparatus may be implemented by a same server, or may be implemented by different servers. In this case, the system may further include a terminal device (not shown in the figure). The terminal device is configured to obtain a translation indication of a user, where the translation indication includes a to-be-translated sentence. The terminal device sends, to the translation apparatus based on the translation indication, request information that carries the to-be-translated sentence or an identifier of the to-be-translated sentence. The translation apparatus responds to the translation request and translates the to-be-translated sentence based on the translation model. After a translation result is obtained, the translation result is sent to the translation apparatus.

In another scenario, the training apparatus may be a server, and the translation apparatus may be a terminal device. After training the translation model, the training apparatus may send the translation model to the terminal device, to deploy the translation model on the terminal device. After obtaining a translation indication of a user, the terminal device inputs the translation model based on a to-be-translated sentence indicated in the translation indication, to obtain a translation result of the to-be-translated sentence.

Therefore, the translation method provided in this application may be performed on a server, or may be performed on a terminal device. The terminal device may be a mobile phone, a tablet personal computer (tablet personal computer, TPC), a media player, a smart television, a laptop computer (laptop computer, LC), a personal digital assistant (personal digital assistant, PDA), a personal computer (personal computer, PC), a smartwatch, a wearable device (wearable device, WD), a self-driving vehicle, or the like that has an image processing function. This is not limited in this application.

The data processing method provided in this application relates to natural language processing, and may be specifically applied to data processing methods such as data training, machine learning, and deep learning. The method may perform symbolized and formalized intelligent information modeling, extraction, preprocessing, training, and the like on training data, to finally obtain a trained target neural network model. In addition, the trained target neural network model may be applied to the translation method provided in this application. Input data (for example, to-be-processed language information) may be input into the trained target neural network model, to obtain output data (for example, a processing result corresponding to a target task). It should be noted that a model training method and the data processing method that are related to a target neural network and that are provided in this application are inventions generated based on a same idea, or may be understood as two parts in a system or two phases, such as a model training phase and a model application phase, of an overall process.

A polysemous word is a word with a plurality of semantic meanings (meanings or interpretations). For example, the Chinese word "加油" has both a meaning of encouragement and a meaning of adding fuel; the Chinese word "东西" has both a meaning of east and west directions and a meaning of things; the Chinese word "粉丝" has both a meaning of followers and a meaning of a food name; the English word "interest" has both a meaning of "兴趣" and a meaning of "利息". In a process of translation between different languages, different meanings of a polysemous word in a source language may be represented by different words in a target language. For example, Chinese translations of the English word "right" include "正确的", "完全的", "立刻", "右边", "权力", "版权", "是的", and the like; and English translations of the Chinese word "意思" include "meaning", "idea", "wish", "hint", and the like. When a polysemous word in a sentence is translated into a word corresponding to an incorrect semantic meaning, a case such as faulty wording, nonfluency, ambiguity, or expression inaccuracy occurs in the translated sentence, which affects a user's understanding of the sentence. For example, in the text "Interest remained high after the hearing", if "interest" is translated into "利息" in Chinese, an incorrect translation sentence is obtained, for example, "听审之后，利息仍然很高", which is difficult to understand in a Chinese context.

How to improve accuracy of polysemous word translation becomes a key issue to be resolved in machine translation. Meanings of a polysemous word may be different in different sentences. An accurate semantic meaning of the polysemous word is generally obtained through inference by using context information of the polysemous word. For example, in the sentence "这家店的牛肉粉丝汤非常好吃" it may be determined, based on context information such as "牛肉", "汤", and "好吃", that "粉丝" is a kind of food instead of followers (fans). However, in a process of encoding a to-be-translated sentence, an encoder of the translation model maps a word vector space to a high-dimensional latent space (latent space). Context semantic information in the word vector space gradually disappears in an encoding mapping process, and a semantic constraint on a polysemous word no longer exists in the latent space. Consequently, disambiguation is insufficient, and thereby an accurate translation result cannot be obtained. In this application, disambiguation means to determine a correct semantic meaning from a plurality of semantic meanings of a polysemous word.

To resolve the foregoing problem, this application provides a translation method, and the translation method is performed by a translation system including a training apparatus and an inference apparatus (which may also be referred to as a translation apparatus), to improve translation accuracy of a polysemous word. The following describes the translation method in detail with reference to the accompanying drawings.

FIG. 4 is a schematic diagram of a structure of a translation model according to this application. The translation model in this embodiment is a neural translation model. The translation model includes an encoder and a decoder.

The encoder encodes a to-be-translated sentence expressed in a source language, and outputs an encoding vector. The decoder decodes the encoding vector output by the encoder to generate a translation result of a corresponding target language expression. The encoder and the decoder may be respectively implemented by software modules running in a processor, or may be respectively implemented by dedicated hardware.

In this embodiment, the encoder includes a disambiguation encoder and a translation encoder. The disambiguation encoder and the translation encoder are different and independent of each other, and the disambiguation encoder and the translation encoder have different focuses on types and capabilities of extracting information (features) from the to-be-translated sentence. The disambiguation encoder is an encoder that is obtained through training and that has a high recognition rate of a correct semantic meaning of a polysemous word, and is configured to improve translation accuracy of the polysemous word. The translation encoder is configured to extract more comprehensive information, such as semantic information and syntactic information, from the to-be-translated sentence, to improve rationality of a word order in a translation result, so that the translation result is more idiomatic and fluent, and is closer to a natural language. Accuracy of the semantic information of the to-be-translated sentence, especially semantic information of the polysemous word, extracted by the disambiguation encoder is greater than or equal to accuracy of the semantic information extracted by the translation encoder.

Specifically, the disambiguation encoder and the translation encoder separately encode the to-be-translated sentence, the disambiguation encoder encodes the to-be-translated sentence into a disambiguation encoding vector, and the translation encoder encodes the to-be-translated sentence into a translation encoding vector. A computer cannot directly recognize input content of a natural language. To enable the disambiguation encoder and the translation encoder to recognize the to-be-translated sentence, a word vector sequence that can be recognized by the disambiguation encoder and the translation encoder needs to be obtained by performing a word embedding operation on the natural language. The disambiguation encoding vector and the translation encoding vector are separately input into the decoder, and the decoder performs decoding with reference to the disambiguation encoding vector and the translation encoding vector, to obtain the translation result corresponding to the to-be-translated sentence. Decoding is performed with reference to the disambiguation encoding vector and the translation encoding vector, so that semantic information with high accuracy in the disambiguation encoding vector can be retained, and the semantic information and syntactic information in the translation encoding vector can be retained, thereby improving semantic accuracy of a word in the translation result, and ensuring accuracy of a word order. In this way, the translation result is more accurate.

That the disambiguation encoder and the translation encoder are different may mean that the disambiguation encoder and the translation encoder use a same neural network but at least some parameters in the neural network are different, or may mean that the disambiguation encoder and the translation encoder use different neural networks. To enable the decoder to better combine the disambiguation encoding vector and the translation encoding vector, a quantity of dimensions of the disambiguation encoding vector is the same as that of the translation encoding vector.

The disambiguation encoder and the translation encoder may extract information by using an RNN, an LSTM, a GRU, an attention mechanism, or the like. The decoder may decode, by using the RNN, the LSTM, the GRU, the attention mechanism, or the like, a vector input by the encoder. Neural networks used by the disambiguation encoder, the translation encoder, and the decoder may be the same or may be different.

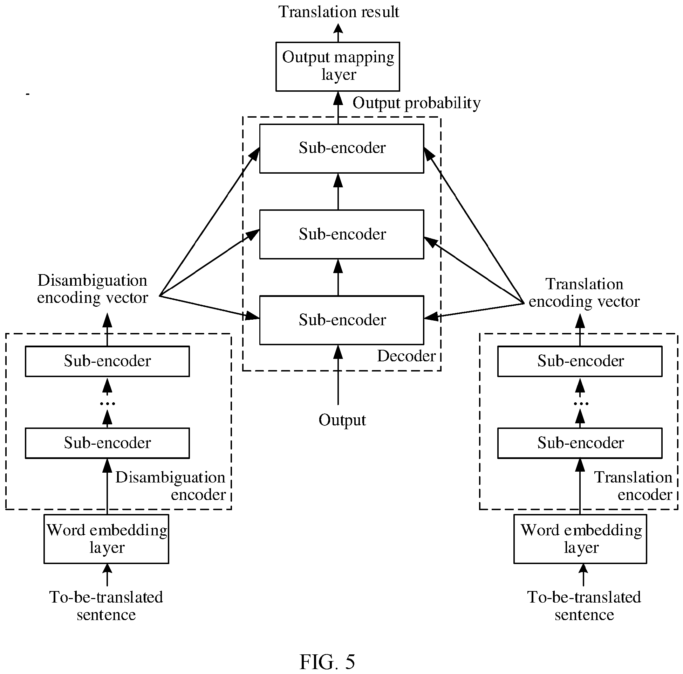

FIG. 5 shows a structure obtained by expanding the translation model shown in FIG. 4. A disambiguation encoder and a translation encoder each include stacked at least one sub-encoder. A quantity of sub-encoders in the disambiguation encoder may be the same as or different from a quantity of sub-encoders in the translation encoder. An output of a previous layer of a sub-encoder of the disambiguation encoder is an input of a next sub-layer, and an output of a top-most sub-encoder is a disambiguation encoding vector. An output of a previous layer of a sub-encoder of the translation encoder is an input of a next sub-layer, and an output of a top-most sub-encoder is a translation encoding vector. A decoder includes stacked at least one sub-decoder. Each sub-decoder of the decoder receives and combines the disambiguation encoding vector and the translation encoding vector and performs decoding, thereby preventing decoding inaccuracy caused by vanishing gradient.

The disambiguation encoder is a new encoder in the translation model. The following describes the disambiguation encoder. For training methods of the translation encoder and the decoder, refer to a conventional technology of neural machine translation. Details are not described herein again. In this embodiment, a specific reason why the disambiguation encoder can improve accuracy of semantic recognition of a polysemous word is that the disambiguation encoder shortens, in a training process, a distance between semantically related training sentences in a latent space, and/or extends a distance between semantically unrelated training sentences in the latent space. In other words, the disambiguation encoder is trained based on a sentence granularity. The disambiguation encoder may further shorten, in the training process, a distance between same or similar meanings of a polysemous word in different training sentences in the latent space, and/or extend a distance between different meanings of the polysemous word in different training sentences in the latent space. In other words, the disambiguation encoder is trained based on a word granularity. Therefore, the disambiguation encoding vector output by the disambiguation encoder can accurately represent a semantic meaning of the polysemous word in a to-be-translated sentence.

In this embodiment, a first training encoding vector of a first training sentence and a second training encoding vector of a second training sentence are obtained through the disambiguation encoder, and the disambiguation encoder is updated based on the first training encoding vector and the second training encoding vector. A language of the first training sentence is the same as a language of the second training sentence.

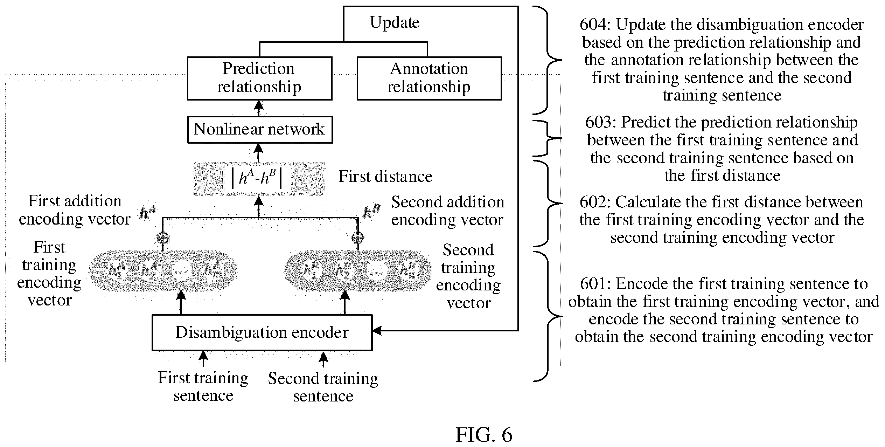

Specifically, FIG. 6 is a schematic diagram of a training method of a disambiguation encoder according to this application. FIG. 6 shows a process of training the disambiguation encoder based on a sentence granularity. This embodiment is performed by the training apparatus in the system in FIG. 3, and includes the following steps.

601: Encode a first training sentence to obtain a first training encoding vector, and encode a second training sentence to obtain a second training encoding vector.

The first training sentence and the second training sentence are a parallel training sentence pair. In this embodiment, the parallel training sentence pair refers to two training sentences that are represented in a same language and have a same semantic expression or different semantic expressions.

The first training sentence and the second training sentence may be semantically related sentences, that is, training sentences that have similar meanings on the whole, and an annotation relationship between the first training sentence and the second training sentence is related. Alternatively, the first training sentence and the second training sentence may be semantically unrelated sentences, that is, training sentences that have different meanings on the whole, and an annotation relationship between the first training sentence and the second training sentence is unrelated.

Before the first training sentence and the second training sentence are input into the disambiguation encoder, a word segmentation operation is performed on the first training sentence and the second training sentence by using a segmenter. The first training sentence is divided into m sub-words, and the second training sentence is divided into n sub-words. Both m and n are integers greater than or equal to 1. The segmenter is, for example, Tokenizer or SentencePiece.

A word vector sequence that includes m word vectors and that is obtained by performing word embedding on the m sub-words of the first training sentence is input into the disambiguation encoder, to obtain the first training encoding vector $\left[ h_1^A h_2^A \ldots h_m^A \right]$ that includes m encoding vectors and that is output by the disambiguation encoder. The first training encoding vector is a representation of the m sub-words of the first training sentence in a latent space. A word vector sequence that includes n word vectors and that is obtained by performing word embedding on the n sub-words of the second training sentence is input into the disambiguation encoder, to obtain the second training encoding vector $\left[ h_1^B h_2^B \ldots h_n^B \right]$ that includes n encoding vectors and that is output by the disambiguation encoder. The second training encoding vector is a representation of the n sub-words of the second training sentence in the latent space.

For example, two training sentences "Met my first girlfriend that way" and "I didn't meet my first girlfriend until later" with similar meanings are used as an example. "Met my first girlfriend that way" can be segmented into three sub-words: "met", "my first girlfriend", and "that way". "I didn't meet my first girlfriend until later" can be segmented into five sub-words: "I", "didn't", "meet", "my first girlfriend", and "until later". The first training encoding vector includes encoding vectors of the three sub-words, and the second training encoding vector includes encoding vectors of the five sub-words.

602: Calculate a first distance between the first training encoding vector and the second training encoding vector.

Because encoding vectors in the first training encoding vector and the second training encoding vector are encoding vectors of sub-words, before calculating the first distance, the first training encoding vector needs to be integrated into a first addition encoding vector, and the second training encoding vector needs to be integrated into a second addition encoding vector. Specifically, the encoding vectors of the m sub-words in the first training encoding vector are added, to obtain the first addition encoding vector. The encoding vectors of the n sub-words in the second training encoding vector are added, to obtain the second addition encoding vector. Then, a cosine distance between the first addition encoding vector and the second addition encoding vector is calculated to obtain the first distance.

603: Predict a prediction relationship between the first training sentence and the second training sentence based on the first distance.

Specifically, the prediction relationship between the first training sentence and the second training sentence is predicted by using a nonlinear network based on the first distance. The nonlinear network may be softmax, sigmoid, a rectified linear unit (rectified linear unit, Relu), hyperbolic tangent (tanh), or the like.

The first distance is input into the nonlinear network. When a value output by the nonlinear network is greater than a threshold, it may be determined that the prediction relationship between the first training sentence and the second training sentence is unrelated. When a value output by the nonlinear network is less than or equal to the threshold, it may be determined that the prediction relationship between the first training sentence and the second training sentence is related.

604: Update the disambiguation encoder based on the prediction relationship and the annotation relationship between the first training sentence and the second training sentence.

If the annotation relationship between the first training sentence and the second training sentence is unrelated but the prediction relationship is related, it indicates that a distance between the first training sentence and the second training sentence is a little short, and a distance between the first training encoding vector and the second training encoding vector may be increased, so that a represented distance between the first training sentence and the second training sentence that are unrelated in the latent space is longer, thereby reducing a probability that the disambiguation encoder extracts incorrect semantic information, or in other words, improving accuracy of semantic information extracted by the disambiguation encoder. The distance between the first training encoding vector and the second training encoding vector may be increased by reducing a loss value of a loss function, and the disambiguation encoder is updated by back propagating the loss value.

If the annotation relationship between the first training sentence and the second training sentence is related but the prediction relationship is unrelated, it indicates that a distance between the first training sentence and the second training sentence is a little long, and a distance between the first training encoding vector and the second training encoding vector may be reduced, so that a represented distance between the first training sentence and the second training sentence that are related in the latent space is shorter, thereby reducing a probability that the disambiguation encoder extracts incorrect semantic information, or in other words, improving accuracy of semantic information extracted by the disambiguation encoder. The distance between the first training encoding vector and the second training encoding vector may be reduced by reducing a loss value of a loss function, and the disambiguation encoder is updated by back propagating the loss value.

Therefore, through training, the disambiguation encoder can not only accurately extract semantic information in a sentence, but also accurately represent a semantic meaning of the sentence in the latent space. In other words, an encoding vector output by the disambiguation encoder includes more accurate semantic information in the sentence, and the sentence includes words. Therefore, that the encoding vector includes more accurate semantic information in the sentence means that the encoding vector includes accurate semantic information of each word in the sentence. A more accurate translation result can be obtained by performing decoding based on the encoding vector output by the disambiguation encoder. Because the semantic information in the sentence is represented in the latent space, the disappearance of context information after passing through a multi-layer network of the encoder does not lead to a case in which the semantic meaning cannot be accurately represented.

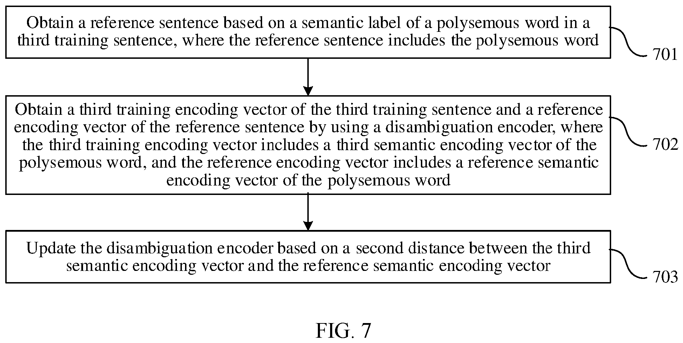

The foregoing is a case in which the disambiguation encoder is trained based on a sentence granularity. To more accurately identify a correct semantic meaning of a polysemous word in a to-be-translated sentence, the disambiguation encoder may be trained based on a word granularity. FIG. 7 is a schematic diagram of another training method of a disambiguation encoder according to this application. This embodiment is performed by the training apparatus in the system in FIG. 3, and includes the following steps.

701: Obtain a reference sentence based on a semantic label of a polysemous word in a third training sentence, where the reference sentence includes the polysemous word.

The semantic label is a correct semantic meaning represented by the polysemous word in the third training sentence. The reference sentence including the polysemous word may be obtained from a dictionary based on the polysemous word and the semantic label. The dictionary includes a plurality of interpretations of the polysemous word, and at least one example sentence corresponding to each interpretation, where the example sentence includes the corresponding polysemous word. The reference sentence may be an example sentence for an interpretation that is the same as or similar to the semantic label. The reference sentence may alternatively be an example sentence for an interpretation that is different from the semantic label. For example, the dictionary is WordNet, or another open-source or user-defined dictionary. In this embodiment, the third training sentence and the reference sentence are a parallel training sentence pair. In this embodiment, the parallel training sentence pair refers to two training sentences that are represented in a same language and include a same polysemous word that expresses a same meaning or different meanings.

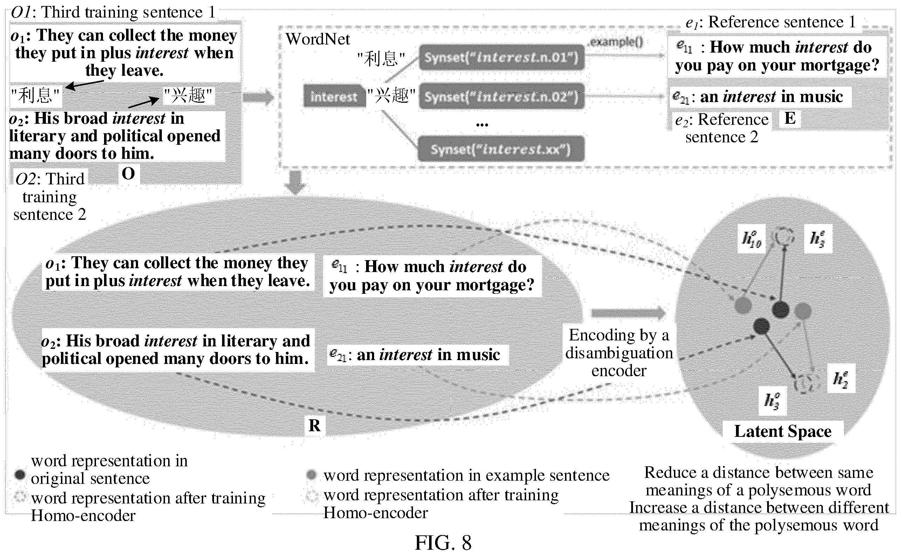

For example, as shown in FIG. 8, if a meaning of a polysemous word in the third training sentence is the same as that in the reference sentence, a semantic label of "interest" in a third training sentence 1 "They can collect the money they put in plus interest when they leave." is "利息", and corresponds to a semantic meaning "Synset ("*interest*.n.01")" in WordNet. A sentence including "interest" that has a meaning of "利息" is obtained based on an "example()" structure of "Synset ("*interest*.n.01")" in WordNet. For example, in a reference sentence 1 "How much interest do you pay on your mortgage?", "interest" also represents the meaning of "利息". A semantic label of "interest" in a third training sentence 2 "His broad interest in literary and political opened many doors to him" is "兴趣". and corresponds to a semantic meaning "Synset ("*interest*.n.02")" in WordNet. A sentence including "interest" that has a meaning of "兴趣" is obtained based on an "example()" structure of "Synset ("*interest*.n.02")" in WordNet. For example, in a reference sentence 2 "an interest in music", "interest" also represents the meaning of "兴趣".

If a meaning of a polysemous word in the third training sentence is different from that in the reference sentence, for example, a semantic label of "interest" in a third training sentence 1 "They can collect the money they put in plus interest when they leave." is "利息", and corresponds to a semantic meaning "Synset ("*interest*.n.01")" in WordNet. In this case, an example sentence having a different semantic meaning from "Synset ("*interest*.n.01")" is obtained. For example, a sentence including "interest" that has a meaning of "兴趣" and that corresponds to a semantic meaning "Synset ("*interest*.n.02")" is obtained. For example, in the reference sentence 2 "an interest in music", "interest" represents the meaning of "兴趣". A semantic label of "interest" in a third training sentence 2 "His broad interest in literary and political opened many doors to him" is "兴趣". and corresponds to the semantic meaning "Synset ("*interest*.n.02")" in WordNet. In this case, an example sentence having a different semantic meaning from "Synset ("*interest*.n.02")" is obtained. For example, a sentence including "interest" that has a meaning of "利息" and that corresponds to the semantic meaning "Synset ("*interest*.n.01")" is obtained. For example, in a reference sentence 1 "How much interest do you pay on your mortgage?", "interest" represents the meaning of "利息".

702: Obtain a third training encoding vector of the third training sentence and a reference encoding vector of the reference sentence by using the disambiguation encoder, where the third training encoding vector includes a third semantic encoding vector of the polysemous word, and the reference encoding vector includes a reference semantic encoding vector of the polysemous word.

A word vector sequence obtained by performing word segmentation and word embedding on the third training sentence and the reference sentence is input into the disambiguation encoder, to obtain the third training encoding vector of the third training sentence and the reference encoding vector of the reference sentence.

The third training encoding vector includes the third semantic encoding vector of the polysemous word, and the reference encoding vector includes the reference semantic encoding vector of the polysemous word.

703: Update the disambiguation encoder based on a second distance between the third semantic encoding vector and the reference semantic encoding vector.

Because the reference sentence is obtained from example sentences based on a same meaning or different meanings of the polysemous word, the third training sentence and the reference sentence implicitly include a related or unrelated relationship. In this case, the second distance may be used as a loss value to update the disambiguation encoder. The second distance is specifically a distance between the third semantic encoding vector and the reference semantic encoding vector.

If a meaning of the polysemous word in the third training sentence is the same as that in the reference sentence, the second distance may be reduced to update the disambiguation encoder, so that a specific semantic meaning of the polysemous word can be mapped to a specific space range of a latent space even in different sentences. In this way, an encoding vector of the specific semantic meaning of the polysemous word can be better clustered. If a meaning of the polysemous word in the third training sentence is different from that in the reference sentence, the second distance may be extended to update the disambiguation encoder, so that different semantic meanings of the polysemous word can be mapped to different space ranges with a long distance in a latent space in different sentences. In this way, encoding vectors of different semantic meanings of the polysemous word can be better dispersed, a possibility that different semantic meanings of the polysemous word overlap in the latent space can be reduced, and the encoding vectors of different semantic meanings of the polysemous word can be better isolated. Therefore, a stable and accurate semantic representation, that is, an encoding vector, of the polysemous word can be obtained by encoding by using the disambiguation encoder.

After training, the disambiguation encoder learns a relationship between a context of an input sentence and semantic meanings of the polysemous word, and can accurately obtain a semantic meaning of the polysemous word based on the input sentence, without leading to a case in which the semantic meaning of the polysemous word is inaccurately represented due to the disappearance of context information. In addition, different semantic meanings have a long distance from each other in the latent space, and same or similar semantic meanings have a short distance from each other in the latent space, and an error of extracted semantic information is smaller, so that the semantic meaning of the polysemous word can be correctly represented in the latent space.

The disambiguation encoder may be trained based only on a sentence granularity, or the disambiguation encoder may be trained based only on a word granularity. Certainly, the disambiguation encoder may alternatively be trained based on a sentence granularity first and then based on a word granularity, to increase a convergence speed of the disambiguation encoder, and enable encoding of the disambiguation encoder to be more accurate.

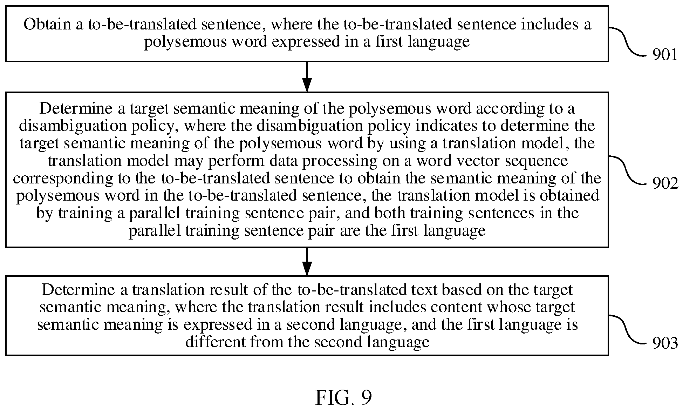

After training of the translation model including the disambiguation encoder is completed, the translation apparatus may perform translation by using a trained translation model. FIG. 9 is a schematic flowchart of a translation method according to this application. This embodiment is performed by the translation apparatus in the system in FIG. 3. This embodiment includes the following steps.

901: Obtain a to-be-translated sentence, where the to-be-translated sentence includes a polysemous word expressed in a first language.

The to-be-translated sentence is represented in a text, and the to-be-translated sentence may further be represented in a speech. For another example, the to-be-translated sentence may further be represented in an image. The to-be-translated sentence may be a sentence, a paragraph, or an article. This is not limited herein.

The to-be-translated sentence is in the first language. The to-be-translated sentence includes at least one polysemous word. Certainly, the to-be-translated sentence may alternatively exclude a polysemous word. Because a disambiguation encoder in a translation model in this application may be obtained by training based on a sentence granularity, accuracy of extracting a semantic meaning of a sentence that excludes a polysemous word is also high.

902: Determine a target semantic meaning of the polysemous word according to a disambiguation rule, where the disambiguation rule indicates to determine the target semantic meaning of the polysemous word by using the translation model, the translation model may perform data processing on a word vector sequence corresponding to the to-be-translated sentence to obtain the semantic meaning of the polysemous word in the to-be-translated sentence, the translation model is obtained by training a parallel training sentence pair, and both training sentences in the parallel training sentence pair are the first language.

The disambiguation rule is to determine the target semantic meaning in a plurality of semantic meanings of the polysemous word by using the translation model. The target semantic meaning is a meaning represented by the polysemous word in the to-be-translated sentence.

The translation model includes a first encoder, a second encoder, and a decoder, where the first encoder is different from the second encoder. The translation model is, for example, a model obtained through training by using the training method in FIG. 6 and/or FIG. 7. For a training process of the translation model, refer to the foregoing related descriptions. Therefore, details are not described herein again. The first encoder is the foregoing disambiguation encoder, and the second encoder is the foregoing translation encoder.

That the translation model may perform data processing on the to-be-translated sentence to obtain a semantic meaning of the polysemous word in the to-be-translated sentence may include: The translation model encodes the word vector sequence corresponding to the to-be-translated sentence to obtain an encoding vector including semantic information of each word in the to-be-translated sentence. The encoding vector includes target semantic information of the polysemous word. The word vector sequence is obtained by performing a word segmentation operation and a word embedding operation on the to-be-translated sentence.

The disambiguation rule specifically indicates a manner of determining the target semantic meaning of the polysemous word by using the first encoder in the translation model.

Specifically, the first encoder encodes the to-be-translated sentence (that is, the word vector sequence corresponding to the to-be-translated sentence) obtained by performing word segmentation and word embedding, to obtain a first encoding vector. The first encoder is mainly configured to extract a semantic meaning of each word in the to-be-translated sentence, and represent the semantic meaning of each extracted word by using the encoding vector. Therefore, the first encoding vector includes the target semantic information of the polysemous word. The first encoder determines the accurate target semantic meaning of the polysemous word in the to-be-translated sentence, so that the target semantic meaning can be represented in a second language, thereby improving translation accuracy.

In this case, the first encoder in the translation model encodes first semantic information of a word in the to-be-translated sentence, to obtain the first encoding vector including the first semantic information of each word in the to-be-translated sentence. In another case, the second encoder may encode syntax of the to-be-translated sentence and a semantic meaning of a word the to-be-translated sentence, to obtain the first encoding vector including syntactic information and second semantic information of the to-be-translated sentence.

Because the first encoder is obtained through training by using the training method in FIG. 6 and/or FIG. 7, semantic information in the to-be-translated sentence can be more accurately extracted. Therefore, accuracy of the first semantic information is greater than or equal to accuracy of the second semantic information. Specifically, the first encoding vector includes a first polysemous word encoding vector of the polysemous word, where the first polysemous word encoding vector includes information about a first semantic meaning (that is, the target semantic meaning) of the polysemous word; and the second encoding vector includes a second polysemous word encoding vector of the polysemous word, where the second polysemous word encoding vector includes information about a second semantic meaning of the polysemous word. Accuracy of the first semantic meaning is greater than or equal to accuracy of the second semantic meaning. Therefore, the first polysemous word encoding vector can increase a probability of translating the polysemous word into the first semantic meaning expressed in the second language, thereby improving translation accuracy of the polysemous word.

The first language and the second language are different languages. For example, the first language is English, and the second language is Chinese; or the first language is French, and the second language is Japanese. The first language and the second language may be different languages. This depends on an actual application situation and is not limited herein.

903: Determine a translation result of the to-be-translated text based on the target semantic meaning, where the translation result includes content whose target semantic meaning is expressed in the second language, and the first language is different from the second language.

After the target semantic meaning of the polysemous word is accurately determined, the decoder in the translation model can decode the target semantic meaning into the corresponding content expressed in second language, so that the semantic meaning of the polysemous word in the to-be-translated sentence has a same meaning as that expressed in the translation result. In this way, the polysemous word is disambiguated, and the translation result can better express the meaning of the to-be-translated sentence.

The decoder may perform decoding with reference to the first encoding vector and the second encoding vector, to obtain the translation result of the to-be-translated sentence. The translation result includes a plurality of translated words that are expressed in the second language and that are arranged in a sequence. Because a distance between a representation of the target semantic meaning of the polysemous word in the first encoding vector and a representation of a different semantic meaning of the polysemous word is relatively long, in a decoding process, the target semantic meaning is slightly affected by the second semantic meaning of the polysemous word in the second encoding vector. Therefore, the translation result includes the target semantic meaning expressed in the second language. In this embodiment, the target semantic meaning and the second semantic meaning may be a specific semantic meaning, or may be a set of similar semantic meanings. In an actual translation process, the target semantic meaning and the second semantic meaning may be the same or different. The translation result is obtained by decoding with reference to information in the first encoding vector and the second encoding vector. Advantages of the first encoding vector and the second encoding vector are combined, so that the translation result is more accurate.

Specifically, the decoder is configured to fuse and decode the first encoding vector and the second encoding vector. The decoder may first fuse the first encoding vector and the second encoding vector, and then decode a fused encoding vector. Alternatively, the decoder may perform decoding when fusing the first encoding vector and the second encoding vector.

The following uses an example in which the decoder has a transformer architecture to describe a process of fusing and decoding the first encoding vector and the second encoding vector. For ease of understanding, in the following description, the first encoder is replaced with the disambiguation encoder, the first encoding vector is replaced with a disambiguation encoding vector, the second encoder is replaced with the translation encoder, and the second encoding vector is replaced with a translation encoding vector. Each sub-decoder of the decoder is a transformer layer. A transformer performs decoding by using an attention mechanism, so that decoding can be well performed in a highly accurate manner with reference to context information and semantic information. The decoder includes, for example, N transformer layers, where N is an integer greater than or equal to 1. Each sub-encoder in the disambiguation encoder and the translation encoder may also be a transformer layer. The transformer layer in the disambiguation encoder and the translation encoder includes a self-attention layer and a feed-forward layer. For a specific structure, refer to the structure of the encoder in FIG. 2. Details are not described herein again.

Each transformer layer in the decoder includes the self-attention layer, a cross-attention layer, and the feed-forward layer. The self-attention layer is configured to calculate self-attention and output a self-attention vector. The cross-attention layer is configured to calculate the self-attention vector and an encoding vector input by the encoder, and output a cross-attention vector. The feed-forward layer is configured to forward propagate the cross-attention vector, perform nonlinear transformation on the cross-attention vector, and output a feed-forward vector. The feed-forward vector is an output of the transformer layer.

Because the decoder outputs translated words one by one, a translated word output by the decoder first affects a next output word. Therefore, the self-attention layer in a bottom-most transformer layer is configured to perform self-attention calculation on the translated word that has been output first, to obtain the self-attention vector. An input of the self-attention layer in a transformer layer that is not the bottom-most transformer layer is an output of a previous transformer layer, and the self-attention layer in the transformer layer that is not the bottom-most transformer layer is configured to perform self-attention calculation on the output of the previous transformer layer, to obtain the self-attention vector.

To prevent a vanishing gradient problem and an exploding gradient problem, the self-attention layer, the cross-attention layer, and the feed-forward layer in each transformer layer in the decoder may further include an addition and normalization layer. Each transformer layer in the disambiguation encoder and the translation encoder includes the self-attention layer and the feed-forward layer, and may further include the addition and normalization layer. Addition is a residual structure, which can prevent the vanishing gradient problem. Normalization is to ensure stability of data feature distribution, accelerate model convergence, and prevent the exploding gradient problem.

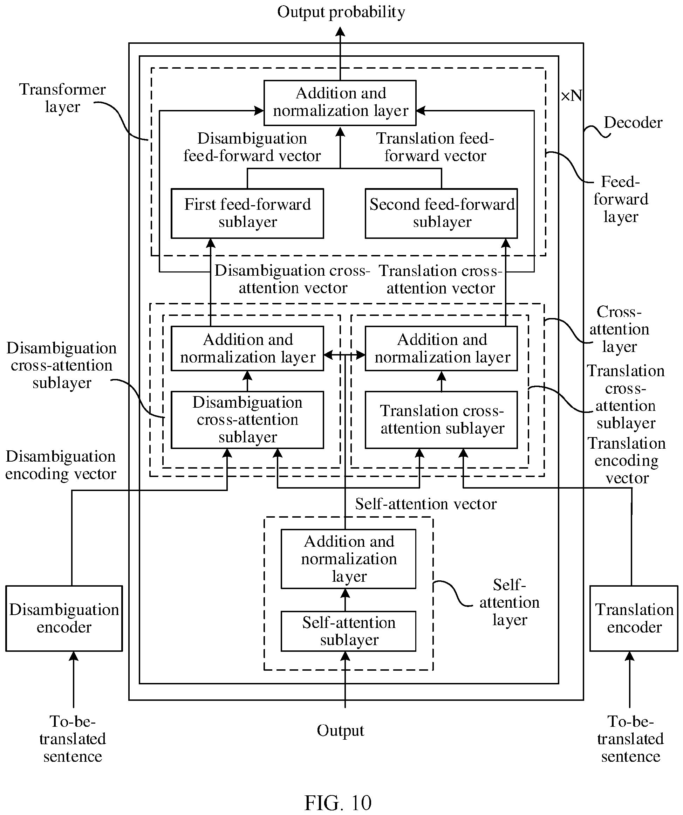

The disambiguation encoding vector and the translation encoding vector may be fused at each cross-attention layer of the decoder, or may be fused at each feed-forward layer of the decoder. The following describes different possible implementations of the decoder. In the following related descriptions of FIG. 10, FIG. 11, FIG. 12a, and FIG. 12b, unless otherwise specified, the transformer layer refers to a transformer layer in the decoder, and the attention layer, the cross-attention layer, and the feed-forward layer all belong to the transformer layer in the decoder.

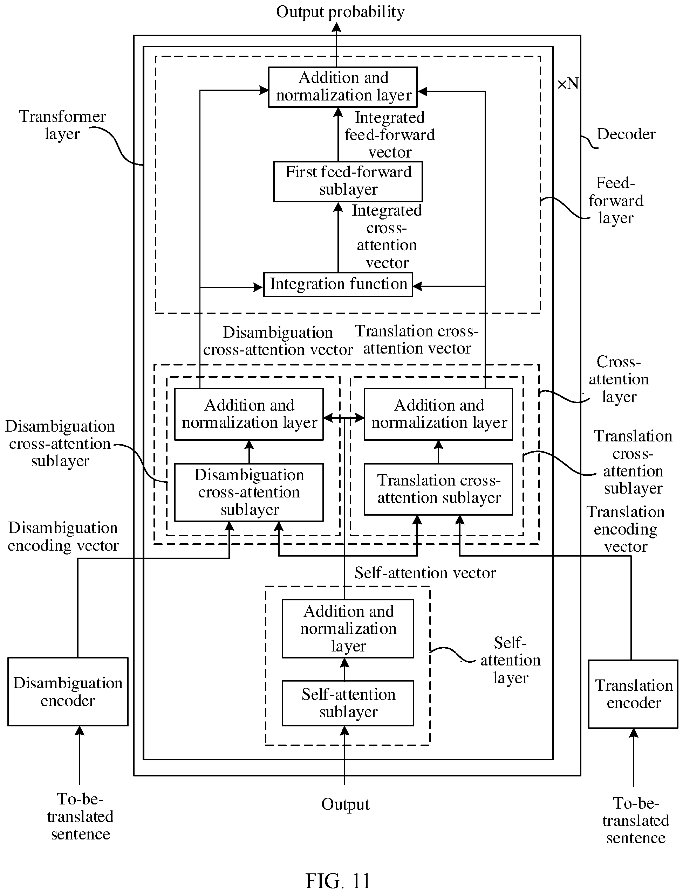

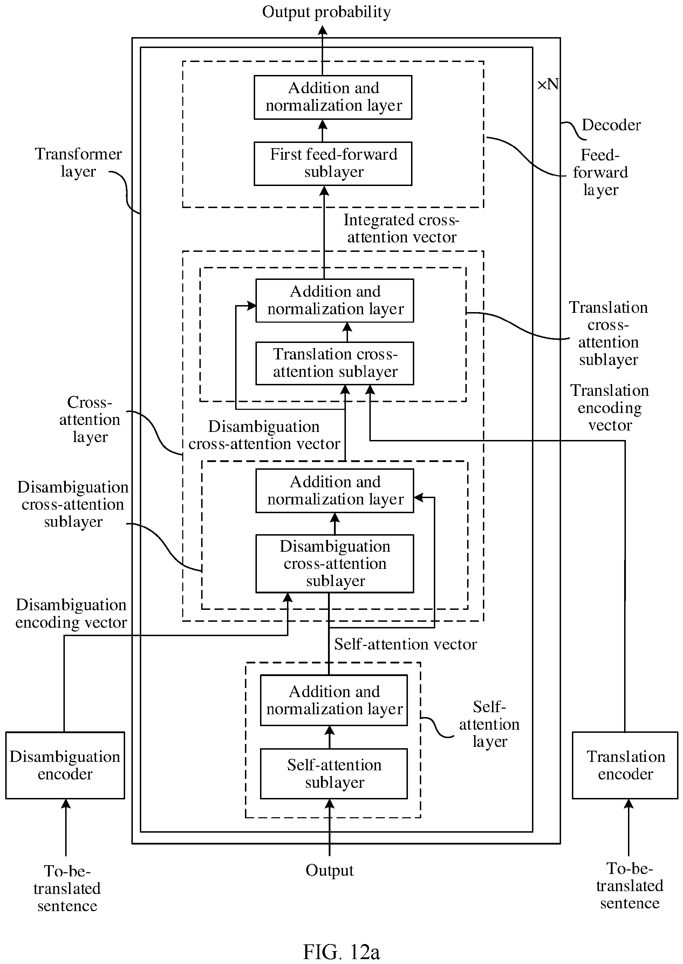

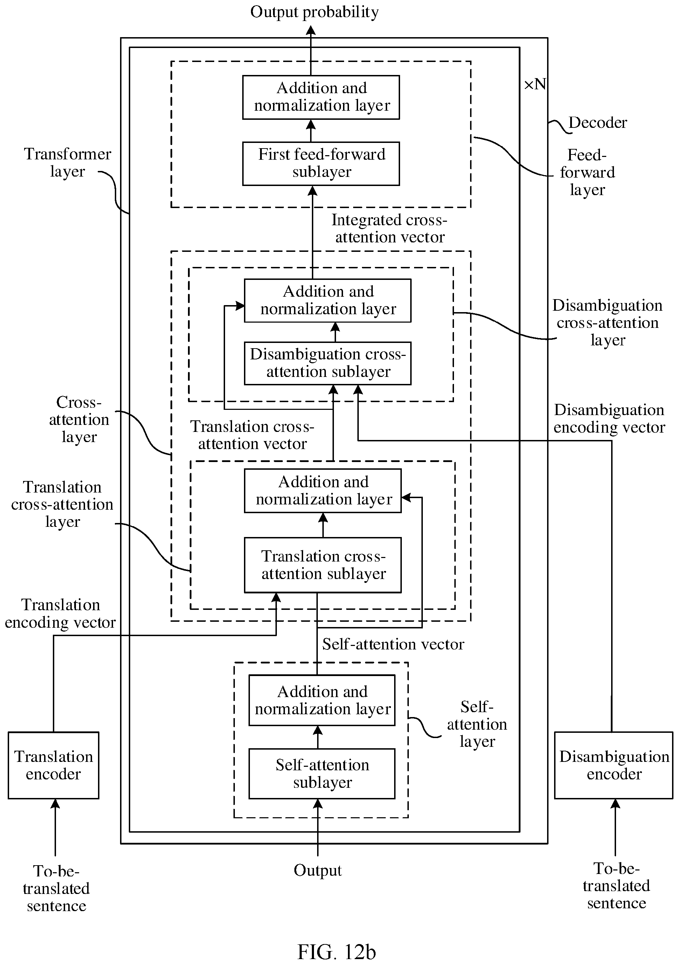

FIG. 10 is a schematic diagram of a structure of another translation model according to this application. 10 is a schematic diagram of a structure obtained by expanding the sub-decoder in the translation model in FIG. 5. It may be understood that, to make the schematic diagram concise, the disambiguation encoder and the translation encoder are simplified in FIG. 10. The same is true of FIG. 11, FIG. 12a, and FIG. 12b. FIG. 10 uses an example in which each sub-decoder of the decoder is a transformer layer, and shows a possible implementation structure of the transformer layer provided in this embodiment. In FIG. 10, after being processed in the cross-attention layer, the disambiguation encoding vector and the translation encoding vector are fused in the addition and normalization layer in the feed-forward layer.

Specifically, the cross-attention layer is configured to obtain a disambiguation cross-attention vector based on the disambiguation encoding vector and the self-attention vector output by the self-attention layer, and obtain a translation cross-attention vector based on the translation encoding vector and the self-attention vector. The feed-forward layer is configured to obtain an output probability of the transformer layer based on the disambiguation cross-attention vector and the translation cross-attention vector, where the output probability is used to predict the translation result, or used as an input of the self-attention layer of a next transformer layer.

The cross-attention layer includes a disambiguation cross-attention sublayer and a translation cross-attention sublayer. The feed-forward layer includes a first feed-forward sublayer, a second feed-forward sublayer, and the addition and normalization layer. The disambiguation cross-attention sublayer is configured to obtain the disambiguation cross-attention vector based on the disambiguation encoding vector and the self-attention vector. The translation cross-attention sublayer is configured to obtain the translation cross-attention vector based on the translation encoding vector and the self-attention vector. The disambiguation cross-attention and translation cross-attention output by the cross-attention layer are added and normalized. The first feed-forward sublayer is configured to forward propagate a disambiguation cross-attention vector to obtain a disambiguation feed-forward vector, the second feed-forward sublayer is configured to forward propagate the translation cross-attention vector to obtain a translation feed-forward vector, and the addition and normalization layer in the feed-forward layer is configured to perform addition on the disambiguation feed-forward vector, the translation feed-forward vector, the disambiguation cross-attention vector, and the translation cross-attention vector to obtain an addition vector, and normalize the addition vector to obtain the output probability.

FIG. 11 is a schematic diagram of a structure of another translation model according to this application. FIG. 11 uses an example in which each sub-decoder of the decoder is a transformer layer, and shows another possible implementation structure of the transformer layer provided in this embodiment. In FIG. 10, after being processed in the cross-attention layer, the disambiguation encoding vector and the translation encoding vector are fused in the addition and normalization layer in the feed-forward layer. However, different from FIG. 10, in FIG. 11, the disambiguation encoding vector and the translation encoding vector are fused in a feed-forward sublayer in the feed-forward layer.

Specifically, the cross-attention layer is configured to obtain a disambiguation cross-attention vector based on the disambiguation encoding vector and the self-attention vector output by the self-attention layer, and obtain a translation cross-attention vector based on the translation encoding vector and the self-attention vector. The feed-forward layer is configured to obtain an output probability of the transformer layer based on the disambiguation cross-attention vector and the translation cross-attention vector, where the output probability is used to predict the translation result, or used as an input of the self-attention layer of a next transformer layer.

The cross-attention layer includes a disambiguation cross-attention sublayer and a translation cross-attention sublayer. The feed-forward layer includes a third feed-forward sublayer, the addition and normalization layer, and an integration function.

The disambiguation cross-attention sublayer is configured to obtain the disambiguation cross-attention vector based on the disambiguation encoding vector and the self-attention vector. The translation cross-attention sublayer is configured to obtain the translation cross-attention vector based on the translation encoding vector and the self-attention vector. The disambiguation cross-attention and translation cross-attention output by the cross-attention layer are added and normalized. The integration function is used to integrate the disambiguation cross-attention vector and the translation cross-attention vector to obtain an integrated cross-attention vector. The third feed-forward sublayer is configured to forward propagate the integrated cross-attention vector to obtain an integrated feed-forward vector. The addition and normalization layer in the feed-forward layer is configured to perform addition on the integrated feed-forward vector, the disambiguation cross-attention vector, and the translation cross-attention vector to obtain an addition vector, and normalize the addition vector to obtain the output probability.

The integration function is used to assign fusion weights to the disambiguation cross-attention vector and the translation cross-attention vector. A fusion weight may be manually configured, or may be learned by the translation model in a training process.

FIG. 12a and FIG. 12b are schematic diagrams of a structure of another translation model according to this application. FIG. 12a and FIG. 12b use an example in which each sub-decoder of the decoder is a transformer layer, and show another possible implementation structure of the transformer layer provided in this embodiment. In FIG. 10 and FIG. 11, after being processed in the cross-attention layer, the disambiguation encoding vector and the translation encoding vector are fused in the feed-forward layer. However, different from FIG. 10 and FIG. 11, in FIG. 12a and FIG. 12b, the disambiguation encoding vector and the translation encoding vector are fused in the cross-attention layer. A difference between FIG. 12a and FIG. 12b lies in that, in FIG. 12a, the disambiguation encoding vector is first fused with the self-attention vector, and then a fused attention vector is fused with the translation encoding vector; in FIG. 12b, the translation encoding vector is first fused with the self-attention vector, and then a fused attention vector is fused with the disambiguation encoding vector.

Specifically, the cross-attention layer is configured to obtain an integrated cross-attention vector based on the disambiguation encoding vector, the translation encoding vector, and the self-attention vector output by the self-attention layer. The feed-forward layer is configured to obtain an output probability of the transformer layer based on the integrated cross-attention vector, where the output probability is used to predict the translation result, or used as an input of the self-attention layer of a next transformer layer.

The cross-attention layer includes a disambiguation cross-attention sublayer and a translation cross-attention sublayer. In an implementation, as shown in FIG. 12a, the disambiguation cross-attention sublayer is configured to obtain a disambiguation cross-attention vector based on the disambiguation encoding vector and the self-attention vector. The translation cross-attention sublayer is configured to obtain the integrated cross-attention vector based on the translation encoding vector and the disambiguation cross-attention vector. Both the disambiguation cross-attention sublayer and the translation cross-attention sublayer include the addition and normalization layer, and the disambiguation cross-attention vector output by the disambiguation cross-attention sublayer undergoes an addition and normalization operation. The integrated cross-attention vector output by the translation cross-attention sublayer undergoes an addition and normalization operation.

In another implementation, as shown in FIG. 12b, the translation cross-attention sublayer is configured to obtain a translation cross-attention vector based on the translation encoding vector and the self-attention vector. The disambiguation cross-attention sublayer is configured to obtain the integrated cross-attention vector based on the disambiguation encoding vector and the translation cross-attention vector. Both the disambiguation cross-attention sublayer and the translation cross-attention sublayer include the addition and normalization layer, and the translation cross-attention vector output by the translation cross-attention sublayer undergoes an addition and normalization operation. The integrated cross-attention vector output by the disambiguation cross-attention sublayer undergoes an addition and normalization operation.

In this embodiment, the disambiguation encoder with a strong semantic recognition capability is obtained through training, so that a semantic meaning of a word, especially a polysemous word, in a to-be-translated sentence can be accurately represented. Therefore, translation accuracy can be improved based on the disambiguation encoding vector output by the disambiguation encoder and the translation encoding vector output by the translation encoder.

Different training modes of the disambiguation encoder and different structures of the decoder lead to different performance improvements in different translation scenarios. The following lists evaluation indicators obtained by combining the embodiments of this solution.

**Table 1. Evaluation indicators based on the solution in FIG. 10**

| Model | English -> Chinese | English -> Russian | English -> German | English -> French |
|---|---|---|---|---|
| Baseline | 25.5 | 23.9 | 26.0 | 38.3 |
| FIG. 6 + FIG. 10 | 25.9 (+0.4) | 24.9 (+1.0) | 26.6 (+0.6) | 38.6 (+0.3) |
| FIG. 7 + FIG. 10 | 26.2 (+0.7) | 25.1 (+1.2) | 26.9 (+0.9) | 39.0 (+0.7) |

**Table 2. Evaluation indicators based on the solution in FIG. 11**

| Model | English -> Chinese | English -> Russian | English -> German | English -> French |
|---|---|---|---|---|
| Baseline | 25.5 | 23.9 | 26.0 | 38.3 |
| FIG. 6 + FIG. 11 | 26.3 (+0.8) | 25.6 (+1.7) | 26.3 (+0.3) | 38.6 (+0.3) |
| FIG. 7 + FIG. 11 | 26.6 (+1.1) | 26.2 (+2.3) | 26.7 (+0.7) | 38.8 (+0.5) |

**Table 3. Evaluation indicators based on the solution in FIG. 12a**

| Model | English -> Chinese | English -> Russian | English -> German | English -> French |
|---|---|---|---|---|
| Baseline | 25.5 | 23.9 | 26.0 | 38.3 |
| FIG. 6 + FIG. 12a | 25.9 (+0.4) | 24.8 (+0.9) | 26.3 (+0.3) | 38.3 (+0.1) |
| FIG. 7 + FIG. 12a | 26.5 (+1.0) | 25.5 (+1.6) | 26.7 (+0.7) | 38.4 (+0.1) |

It can be learned that, based on the solutions provided in this application, performance of the translation model is significantly improved.

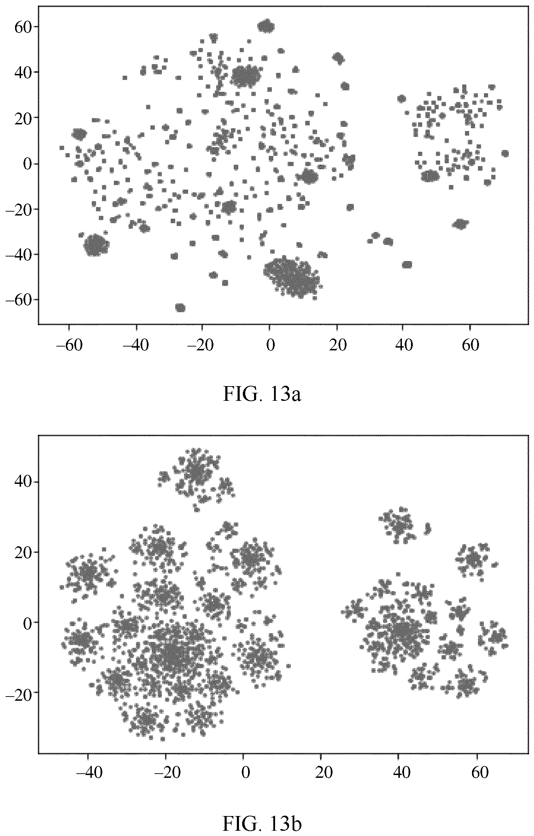

As shown in FIG. 13a and FIG. 13b, to further verify effect of extracting semantic information of a disambiguation encoder provided in this application, a total of 3,000 sentences including a polysemous word "right" are sampled for a visual experiment, to explicitly reflect a feature of each word in a latent space. Based on an experimental result, this method can greatly aggregate same meanings of the polysemous word, and can evidently distinguish between different meanings of the polysemous word.

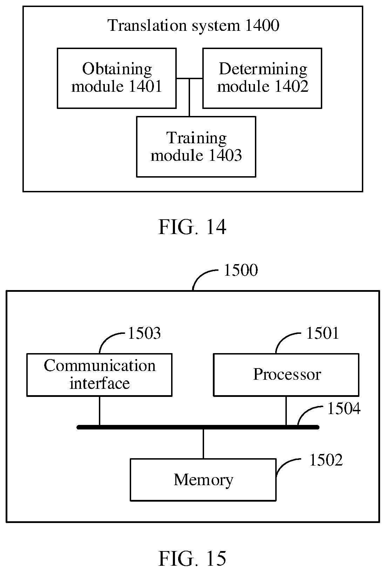

Based on a same technical concept, this application further provides a translation system. The translation system may be a server, or may be a terminal device. As shown in FIG. 14, a translation system 1400 includes an obtaining module 1401 and a determining module 1402. The obtaining module 1401 is configured to obtain a to-be-translated sentence, where the to-be-translated sentence includes a polysemous word expressed in a first language. The determining module 1402 is configured to determine a target semantic meaning of the polysemous word according to a disambiguation rule, where the disambiguation rule indicates to determine the target semantic meaning of the polysemous word by using a translation model, the translation model may perform data processing on a word vector sequence corresponding to the to-be-translated sentence to obtain the target semantic meaning of the polysemous word in the to-be-translated sentence, the translation model is obtained by training a parallel training sentence pair, and both training sentences in the parallel training sentence pair are the first language. The determining module is configured to determine a translation result of the to-be-translated text based on the target semantic meaning, where the translation result includes content whose target semantic meaning is expressed in a second language, and the first language is different from the second language.

In a possible implementation, the translation model includes a first encoder, and the disambiguation rule indicates a manner of determining the target semantic meaning of the polysemous word by using the first encoder.

In a possible implementation, the parallel training sentence pair includes a first training sentence and a second training sentence, and the translation apparatus further includes a training module 1403. The training module 1403 is configured to: encode the first training sentence to obtain a first training encoding vector; encode the second training sentence to obtain a second training encoding vector; and obtain the first encoder based on a first distance between the first training encoding vector and the second training encoding vector, where a semantic meaning represented by the first training sentence and a semantic meaning represented by the second training sentence are the same.

In a possible implementation, the parallel training sentence pair includes a third training sentence and a reference sentence, the parallel training sentence pair includes the third training sentence and the reference sentence, and the translation apparatus further includes the training module 1403. The training module 1403 is configured to: encode the third training sentence to obtain a third training encoding vector, where the third training encoding vector includes a first polysemous word encoding vector of a training polysemous word; encode the second training sentence to obtain a reference encoding vector, where the reference encoding vector includes a second polysemous word encoding vector of the training polysemous word; and obtain the first encoder based on a second distance between the first polysemous word encoding vector and the second polysemous word encoding vector.

In a possible implementation, a semantic meaning of the training polysemous word in the third training sentence is the same as or similar to that in the reference sentence, and the first encoder is obtained through an update by reducing the second distance. Alternatively, a semantic meaning of the polysemous word in the third training sentence is different from that in the reference sentence, and the first encoder is obtained through an update by increasing the second distance.

In a possible implementation, the translation model includes the first encoder, a second encoder, and a decoder. The determining module 1402 is configured to: encode the to-be-translated sentence by using the first encoder to obtain a first encoding vector, where the first encoding vector includes information about the target semantic meaning of the polysemous word; encode the to-be-translated sentence by using the second encoder to obtain a second encoding vector, where the second encoding vector includes syntax information and semantic information of the to-be-translated sentence; and decode the first encoding vector and the second encoding vector by using the decoder, to obtain the translation result.

It should be understood that the translation system in this application of the present invention may be implemented by using a central processing unit (central processing unit, CPU) or a device including a CPU, or may be implemented by using an application-specific integrated circuit (application-specific integrated circuit, ASIC), or a programmable logic device (programmable logic device, PLD). The PLD may be a complex programmable logic device (complex programmable logic device, CPLD), a field-programmable gate array (field-programmable gate array, FPGA), a general array logic (generic array logic, GAL), a data processing unit (data processing unit, DPU), a system on chip (system on chip, SoC), an AI chip, or any combination thereof. The translation system may alternatively be implemented by a device including at least one of the foregoing processors. When implementing any translation method in FIG. 5 to FIG. 8 by using software, the translation apparatus and modules of the translation apparatus may be software modules.

This application further provides a computing device. FIG. 15 is a schematic diagram of a structure of the computing device according to this application. A computing device 1500 includes a processor 1501, a memory 1502, a communication interface 1503, and a bus 1504. The processor 1501, the memory 1502, and the communication interface 1503 communicate with each other through the bus 1504, or may implement communication by wireless transmission or by another means. The memory 1502 is configured to store instructions, and the processor 1501 is configured to execute the instructions stored in the memory 1502. The memory 1502 stores program code, and the processor 1501 may invoke the program code stored in the memory 1502 to perform the following operations:

Obtain a to-be-translated sentence, where the to-be-translated sentence includes a polysemous word expressed in a first language; determine a target semantic meaning of the polysemous word according to a disambiguation rule, where the disambiguation rule indicates to determine the target semantic meaning of the polysemous word by using a translation model, the translation model may perform data processing on a word vector sequence corresponding to the to-be-translated sentence to obtain the semantic meaning of the polysemous word in the to-be-translated sentence, the translation model is obtained by training a parallel training sentence pair, and both training sentences in the parallel training sentence pair are the first language; and determine a translation result of the to-be-translated text based on the target semantic meaning, where the translation result includes content whose target semantic meaning is expressed in a second language, and the first language is different from the second language.

It should be understood that, in this application, the processor 1501 may be a CPU, or the processor 1501 may be another general-purpose processor, a digital signal processor (digital signal processor, DSP), an application-specific integrated circuit (ASIC), a field-programmable gate array (FPGA), another programmable logic device, a discrete gate or a transistor logic device, a discrete hardware component, an artificial intelligence chip, a data processing unit (data processing unit, DPU), a system on chip (System on chip, SoC), an artificial intelligence chip, or the like. In addition, a quantity of processors and a quantity of processor cores are not limited in this application, and may be set based on a service requirement in specific implementation.

The memory 1502 may include a read-only memory and a random access memory, and provide instructions and data for the processor 1501. The memory 1502 may further include a non-volatile random access memory. For example, the memory 1502 may further store information of a device type.

The memory 1502 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In addition to including a data bus, the bus 1504 may further include a power bus, a control bus, a status signal bus, and the like. However, for clear description, various types of buses in the figure are marked as the bus 1504.

The bus 1504 may be a peripheral component interconnect express (Peripheral Component Interconnect Express, PCIe) bus, an extended industry standard architecture (extended industry standard architecture, EISA) bus, a unified bus (unified bus, Ubus, or UB), a computer express link (compute express link, CXL), a cache coherent interconnect for accelerators (cache coherent interconnect for accelerators, CCIX), or the like. The bus 1504 may be divided into an address bus, a data bus, a control bus, and the like.

It should be understood that the computing device 1500 according to this embodiment of this application may correspond to the translation system 1400 in the embodiments of this application, and may correspond to a corresponding entity that performs the translation method according to embodiments of this application. In addition, the foregoing and other operations and/or functions of the modules in the computing device 1500 are respectively used to implement corresponding processes performed by the training apparatus or the translation apparatus in the methods in FIG. 9 or FIG. 6, FIG. 7, and FIG. 9. For brevity, details are not described herein again.

This application further provides a translation system. The translation system includes at least two computing devices shown in FIG. 15. In this case, the training apparatus and the translation apparatus in FIG. 3 may be respectively implemented by different computing devices, and are configured to implement a corresponding process performed by the training apparatus or the translation apparatus in the method in FIG. 6, FIG. 7, or FIG. 9. For brevity, details are not described herein again.

This application further provides a chip system, including a processor and a power supply circuit. The power supply circuit is configured to supply power to the processor, and the processor is configured to perform the operation steps of the method in the embodiment corresponding to FIG. 6, FIG. 7, or FIG. 9.

The foregoing embodiments may be wholly or partially implemented by using software, hardware, firmware, or any combination thereof. When software is used to implement embodiments, the foregoing embodiments may be implemented wholly or partially in a form of a computer program product. The computer program product includes one or more computer instructions. When the computer program instructions are loaded or executed on a computer, processes or functions according to embodiments of this application of the present invention are wholly or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid state disk (solid state disk, SSD).

The foregoing descriptions are merely specific implementations of this application. Any variation or replacement readily figured out by a person skilled in the art based on the specific implementations provided in this application shall fall within the protection scope of this application.

## Claims

1. A translation method, wherein the method comprises:

   obtaining a to-be-translated sentence, wherein the to-be-translated sentence comprises a polysemous word expressed in a first language;
   determining a target semantic meaning of the polysemous word according to a disambiguation rule, wherein the disambiguation rule indicates to determine the target semantic meaning of the polysemous word by using a translation model, the translation model may perform data processing on a word vector sequence corresponding to the to-be-translated sentence to obtain the semantic meaning of the polysemous word in the to-be-translated sentence, the translation model is obtained by training a parallel training sentence pair, and both training sentences in the parallel training sentence pair are the first language; and
   determining a translation result of the to-be-translated text based on the target semantic meaning, wherein the translation result comprises content whose target semantic meaning is expressed in a second language, and the first language is different from the second language.

2. The method according to claim 1, wherein the translation model comprises a first encoder, and the disambiguation rule indicates a manner of determining the target semantic meaning of the polysemous word by using the first encoder.

3. The method according to claim 2, wherein the parallel training sentence pair comprises a first training sentence and a second training sentence, and before the obtaining a to-be-translated sentence, the method further comprises:

   encoding the first training sentence to obtain a first training encoding vector;
   encoding the second training sentence to obtain a second training encoding vector; and
   obtaining the first encoder based on a first distance between the first training encoding vector and the second training encoding vector, wherein
   a semantic meaning represented by the first training sentence and a semantic meaning represented by the second training sentence are the same.

4. The method according to claim 2 or 3, wherein the parallel training sentence pair comprises a third training sentence and a reference sentence, and before the obtaining a to-be-translated sentence, the method further comprises:

   encoding the third training sentence to obtain a third training encoding vector, wherein the third training encoding vector comprises a first polysemous word encoding vector of a training polysemous word;
   encoding the second training sentence to obtain a reference encoding vector, wherein the reference encoding vector comprises a second polysemous word encoding vector of the training polysemous word; and
   obtaining the first encoder based on a second distance between the first polysemous word encoding vector and the second polysemous word encoding vector.

5. The method according to claim 4, wherein a semantic meaning of the training polysemous word in the third training sentence is the same as or similar to that in the reference sentence, and the first encoder is obtained by reducing the second distance; or

a semantic meaning of the polysemous word in the third training sentence is different from that in the reference sentence, and the first encoder is obtained by increasing the second distance.

6. A translation system, wherein the translation apparatus comprises:

an obtaining module, configured to obtain a to-be-translated sentence, wherein the to-be-translated sentence comprises a polysemous word expressed in a first language; and

a determining module, configured to determine a target semantic meaning of the polysemous word according to a disambiguation rule, wherein the disambiguation rule indicates to determine the target semantic meaning of the polysemous word by using a translation model, the translation model may perform data processing on a word vector sequence corresponding to the to-be-translated sentence to obtain the target semantic meaning of the polysemous word in the to-be-translated sentence, the translation model is obtained by training a parallel training sentence pair, and both training sentences in the parallel training sentence pair are the first language, wherein

the determining module is configured to determine a translation result of the to-be-translated text based on the target semantic meaning, wherein the translation result comprises content whose target semantic meaning is expressed in a second language, and the first language is different from the second language.

7. The apparatus according to claim 6, wherein the translation model comprises a first encoder, and the disambiguation rule indicates a manner of determining the target semantic meaning of the polysemous word by using the first encoder.

8. The apparatus according to claim 7, wherein the parallel training sentence pair comprises a first training sentence and a second training sentence, the translation apparatus further comprises a training module, and the training model is configured to:

encode the first training sentence to obtain a first training encoding vector;

encode the second training sentence to obtain a second training encoding vector; and

obtain the first encoder based on a first distance between the first training encoding vector and the second training encoding vector, wherein a semantic meaning represented by the first training sentence and a semantic meaning represented by the second training sentence are the same.

9. The apparatus according to claim 7 or 8, wherein the parallel training sentence pair comprises a third training sentence and a reference sentence, the translation apparatus further comprises the training module, and the training model is configured to:

encode the third training sentence to obtain a third training encoding vector, wherein the third training encoding vector comprises a first polysemous word encoding vector of a training polysemous word;

encode the second training sentence to obtain a reference encoding vector, wherein the reference encoding vector comprises a second polysemous word encoding vector of the training polysemous word; and

obtain the first encoder based on a second distance between the first polysemous word encoding vector and the second polysemous word encoding vector.

10. The apparatus according to claim 9, wherein a semantic meaning of the training polysemous word in the third training sentence is the same as or similar to that in the reference sentence, and the first encoder is obtained through an update by reducing the second distance; or

a semantic meaning of the polysemous word in the third training sentence is different from that in the reference sentence, and the first encoder is obtained through an update by increasing the second distance.

11. A computing device, wherein the device comprises a processor and a memory, the processor is coupled to the memory, and the processor is configured to perform, according to instructions stored in the memory, the translation method according to any one of claims 1 to 5.

12. A computer-readable storage medium, comprising instructions, wherein when the computer-readable storage medium is run on a computer, the computer is enabled to perform the data processing method according to any one of claims 1 to 5.

FIG. 1

Translation result

Output mapping
layer

Decoder

Feed-forward
network layer

Cross-attention
layer

Self-attention
layer

Multi-
layer
network
structure

Encoder

Feed-forward
network layer

Self-attention
layer

Multi-
layer
network
structure

...

...

Feed-forward
network layer

Feed-forward
network layer

Self-attention
layer

Cross-attention
layer

Self-attention
layer

Word embedding
layer

Word embedding
layer

Source sentence

Generated
translation result

FIG. 2

EP 4 365 768 A1

Training
apparatus

Translation
apparatus

FIG. 3

Translation result

Decoder

Disambiguation
encoding vector

Translation
encoding vector

Disambiguation
encoder

Translation encoder

To-be-translated sentence

To-be-translated sentence

FIG. 4

25

FIG. 5

FIG. 6

604: Update the disambiguation encoder based on the prediction relationship and the annotation relationship between the first training sentence and the second training sentence

603: Predict the prediction relationship between the first training sentence and the second training sentence based on the first distance

602: Calculate the first distance between the first training encoding vector and the second training encoding vector

601: Encode the first training sentence to obtain the first training encoding vector, and encode the second training sentence to obtain the second training encoding vector

Obtain a reference sentence based on a semantic label of a polysemous word in a third training sentence, where the reference sentence includes the polysemous word ⟋ 701

Obtain a third training encoding vector of the third training sentence and a reference encoding vector of the reference sentence by using a disambiguation encoder, where the third training encoding vector includes a third semantic encoding vector of the polysemous word, and the reference encoding vector includes a reference semantic encoding vector of the polysemous word ⟋ 702

Update the disambiguation encoder based on a second distance between the third semantic encoding vector and the reference semantic encoding vector ⟋ 703

FIG. 7

*O1*: Third training sentence 1

*o₁*: **They can collect the money they put in plus *interest* when they leave.**

"利息" "兴趣"

*o₂*: **His broad *interest* in literary and political opened many doors to him.**

*O2*: Third **O** training sentence 2

WordNet

"利息" Synset("*interest.n.01*")

interest "兴趣" Synset("*interest.n.02*")

...

Synset("*interest.xx*")

example()

*e₁*: Reference sentence 1

*e₁₁* : **How much *interest* do you pay on your mortgage?**

*e₂₁*: **an *interest* in music**

*e₂*: Reference **E** sentence 2

*o₁*: **They can collect the money they put in plus *interest* when they leave.**

*o₂*: **His broad *interest* in literary and political opened many doors to him.**

*e₁₁* : **How much *interest* do you pay on your mortgage?**

*e₂₁*: **an *interest* in music**

**R**

Encoding by a disambiguation encoder

$h_{10}^e$ $h_3^e$

$h_2^e$

$h_3^e$

**Latent Space**

● word representation in original sentence

○ word representation after training Homo-encoder

● word representation in example sentence

○ word representation after training Homo-encoder

Reduce a distance between same meanings of a polysemous word

Increase a distance between different meanings of the polysemous word

FIG. 8

Obtain a to-be-translated sentence, where the to-be-translated sentence includes a polysemous word expressed in a first language

901

Determine a target semantic meaning of the polysemous word according to a disambiguation policy, where the disambiguation policy indicates to determine the target semantic meaning of the polysemous word by using a translation model, the translation model may perform data processing on a word vector sequence corresponding to the to-be-translated sentence to obtain the semantic meaning of the polysemous word in the to-be-translated sentence, the translation model is obtained by training a parallel training sentence pair, and both training sentences in the parallel training sentence pair are the first language

902

Determine a translation result of the to-be-translated text based on the target semantic meaning, where the translation result includes content whose target semantic meaning is expressed in a second language, and the first language is different from the second language

903

FIG. 9

Output probability

Transformer layer

×N

Decoder

Addition and normalization layer

Disambiguation feed-forward vector

Translation feed-forward vector

Feed-forward layer

First feed-forward sublayer

Second feed-forward sublayer

Disambiguation cross-attention vector

Translation cross-attention vector

Cross-attention layer

Disambiguation cross-attention sublayer

Addition and normalization layer

Addition and normalization layer

Translation cross-attention sublayer

Disambiguation cross-attention sublayer

Translation cross-attention sublayer

Disambiguation encoding vector

Translation encoding vector

Self-attention vector

Disambiguation encoder

Addition and normalization layer

Self-attention layer

Translation encoder

Self-attention sublayer

To-be-translated sentence

Output

To-be-translated sentence

FIG. 10

Output probability

Transformer
layer

Decoder

Addition and
normalization layer

×N

Integrated
feed-forward
vector

Feed-
forward
layer

First feed-forward
sublayer

Integrated
cross-
attention
vector

Integration function

Disambiguation
cross-attention vector

Translation cross-
attention vector

Cross-
attention
layer

Disambiguation
cross-attention
sublayer

Addition and
normalization layer

Addition and
normalization layer

Translation
cross-
attention
sublayer

Disambiguation
cross-attention
sublayer

Translation cross-
attention sublayer

Disambiguation
encoding vector

Translation
encoding
vector

Self-attention vector

Addition and
normalization
layer

Self-
attention
layer

Self-attention
sublayer

Disambiguation
encoder

Translation
encoder

To-be-
translated
sentence

Output

To-be-
translated
sentence

FIG. 11

Output probability

FIG. 12a

FIG. 12b

FIG. 13a

FIG. 13b

Translation system 1400

Obtaining
module 1401

Determining
module 1402

Training
module 1403

FIG. 14

1500

1503

Communication
interface

1501

Processor

1504

1502

Memory

FIG. 15

## INTERNATIONAL SEARCH REPORT

| | International application No. |
|---|---|
| | **PCT/CN2023/104502** |

| A. | CLASSIFICATION OF SUBJECT MATTER |
|---|---|

G06F 40/58(2020.01)i

According to International Patent Classification (IPC) or to both national classification and IPC

| B. | FIELDS SEARCHED |
|---|---|

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNTXT; CNABS; EPTXT; USTXT; WOTXT; VEN; CNKI; IEEE: 翻译, 模型, 多义, 消歧, 训练, 语种, translate, model, polysemy, disambiguate, train, language

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 113392654 A (NANJING HANZHIWEN TECHNOLOGY CO., LTD.) 14 September 2021 (2021-09-14)<br>description, paragraphs 22-50 | 1-12 |
| Y | CN 111310475 A (ALIPAY (HANGZHOU) INFORMATION TECHNOLOGY CO., LTD.) 19 June 2020 (2020-06-19)<br>description, paragraphs 66-137 | 1-12 |
| Y | 邓龙 (DENG, Long). "基于语义的中文词义消歧技术研究 (Non-official translation: Semantic-based Chinese Word Meaning Disambiguation Technology Research)"<br>中国优秀硕士学位论文全文数据库 信息科技辑 (*Information Science and Technology, Chinese Master's Theses Full-Text Database*), 15 July 2015 (2015-07-15),<br>pages 35-40 | 1-12 |
| A | US 2020034436 A1 (GOOGLE LLC) 30 January 2020 (2020-01-30)<br>entire document | 1-12 |

☐ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 September 2023** | **15 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/104502**

| Patent document cited in search report | | | Publication date (day/month/year) | Patent family member(s) | | | Publication date (day/month/year) |
|---|---|---|---|---|---|---|---|
| CN | 113392654 | A | 14 September 2021 | None | | | |
| CN | 111310475 | A | 19 June 2020 | CN | 111310475 | B | 10 March 2023 |
| US | 2020034436 | A1 | 30 January 2020 | US | 11138392 | B2 | 05 October 2021 |
| | | | | US | 2022083746 | A1 | 17 March 2022 |

Form PCT/ISA/210 (patent family annex) (July 2022)

**REFERENCES CITED IN THE DESCRIPTION**

**Patent documents cited in the description**

- CN 202211123598
- CN 202211538681